# EUROPÄISCHE PATENTSCHRIFT

(11) **EP 3 292 056 B1**
(45) Veröffentlichungstag und Bekanntmachung des Hinweises auf die Patenterteilung: **23.02.2022**
(21) Anmeldenummer: 16723975.5
(22) Anmeldetag: 09.05.2016
(51) Int. Cl.: B65G 43/10, B65G 13/06

(54) **FÖRDERVORRICHTUNG MIT EINER STEUERUNGSEINHEIT MIT HARDWARE-ERKENNUNG**
CONVEYOR WITH A CONTROL UNIT WITH HARDWARE DETECTION
DISPOSITIF DE TRANSPORT AVEC UNE UNITÉ DE COMMANDE À DÉTECTION DE MATÉRIEL

(30) Priorität: 07.05.2015 DE 102015107167
(43) Veröffentlichungstag der Anmeldung: 14.03.2018
(73) Patentinhaber: Interroll Holding AG, 6592 Sant' Antonino (CH)
(72) Erfinder: HENZE, Herbert, 42929 Wermelskirchen (DE)
(74) Vertreter: Kohlhof, Stephan
(86) Internationale Anmeldenummer: PCT/EP2016/060269
(87) Internationale Veröffentlichungsnummer: WO 2016/177906

(56) Entgegenhaltungen:
- EP-A1- 1 277 096
- WO-A1-2012/154650
- DE-A1-102010 037 601
- US-A1- 2006 030 968

## Beschreibung

Die Erfindung betrifft ein Verfahren zum Einrichten einer Steuerungseinheit in einer Fördervorrichtung, wobei eine Steuerungseinheit ein oder mehrere Fördersegmente steuert und jedes Fördersegment einen Förderantrieb zum Fördern eines Objekts durch das Fördersegment, der signaltechnisch über eine Motoranschlussbuchse mit der Steuerungseinheit gekoppelt ist, und einen Sensor zum Erfassen eines Objekts an einer Position innerhalb des Fördersegments, der signaltechnisch über eine Sensoranschlussbuchse mit der Steuerungseinheit gekoppelt ist, aufweist. Ein weiterer Aspekt der Erfindung ist eine Steuerungseinheit für eine Fördervorrichtung, wobei die Steuerungseinheit ausgebildet ist, um ein oder mehrere Fördersegmente zu steuern und jedes Fördersegment einen Förderantrieb zum Fördern eines Objekts durch das Fördersegment, der signaltechnisch über eine Motoranschlussbuchse mit der Steuerungseinheit gekoppelt ist, und einen Sensor zum Erfassen eines Objekts an einer Position innerhalb des Fördersegments, der signaltechnisch über eine Sensoranschlussbuchse mit der Steuerungseinheit gekoppelt ist, umfasst.

Fördervorrichtungen und Verfahren für deren Betrieb sind grundsätzlich beispielsweise aus EP1656312B1 oder AT13066U1 bekannt. WO2012/154650A1 offenbart eine Fördervorrichtung mit mehreren Steuerungseinheiten. Jede Steuerungseinheit weist eine Schnittstelle auf, an die bis zu zwei Motorrollen und bis zu zwei Sensoren angeschlossen werden können. Die Steuerungseinheiten sind dazu ausgebildet, die Sensoren, die an diese Schnittstelle angeschlossen sind, zu detektieren, was beinhaltet, dass detektiert wird ob irgendwelche Sensoren an die Schnittstelle angeschlossen sind. WO2012/154650A1 offenbart den Oberbegriff der Ansprüche 1, 13, 15 und 17.

Fördervorrichtungen werden in Förderanlagen eingesetzt, in denen Logistikprozesse voll- und teilautomatisiert ablaufen. Durch Fördervorrichtungen werden beispielsweise Gegenstände wie Pakete, Paletten, Waren und andere Güter von einem Ausgangsort zu einem Zielort befördert. Ausgangsorte und Zielorte sind in komplexen Förderanlagen mitunter weit voneinander entfernt. Fördervorrichtungen sind in eine Vielzahl von Fördersegmenten unterteilt, welche in Reihe hintereinander angeordnet sind und so eine Förderstrecke bilden können, die ein Transportgut vom Ausgangsort stromabwärts zum Zielort befördert. Förderstrecken können parallel aufgebaut werden und zum Beispiel durch Zusammenführungsvorrichtungen, Vereinzelungsvorrichtungen, Absenkvorrichtungen oder Hebevorrichtungen miteinander verbunden sein. So ergeben sich komplexe Fördervorrichtungen, die aus einer Vielzahl von Fördersegmenten bestehen. Grundsätzlich kann dabei jedes Fördersegment eine separate, in einem Gehäuse angeordnete Steuerungseinheit aufweisen oder es können die Steuerungseinheiten für mehrere benachbarte Fördersegmente in einem gemeinsamen Steuerungsmodul zusammengefasst sein.

Häufig wird ein Fördersegment zudem mit einer Sensoreinheit ausgestattet, die in Form eines Belegtsignals eine Information darüber bereitstellt, ob ein Fördersegment durch ein Transportgut belegt ist oder ob es unbelegt ist. In diesem Zusammenhang sind typische Sensoren zum Beispiel Lichtschranken, Lichttaster, optische Scanner oder Näherungsschalter. Diese Information wird während des Betriebs einer Förderanlage zur Überwachung und Planung des Transportflusses benötigt. Jedes Fördersegment weist einen Förderantrieb auf, zum Beispiel Rollenantriebe, Bandantriebe, Vibrationsantriebe u. a. Zum Zweck einer individuellen Ansteuerung ist jedes Fördersegment an eine Steuerungseinheit signaltechnisch gekoppelt.

Förderstrecken und Fördervorrichtungen werden bei einer Neuinstallation oder einer ergänzenden oder abändernden Installation solcherart montiert und signaltechnisch konnektiert, dass jede Sensoreinheit und jeder Förderantrieb mit einer Steuerungseinheit signaltechnisch gekoppelt wird. Dies erfolgt in der Regel mittels einer Verkabelung, indem ein an dem Sensor beziehungsweise an dem Förderantrieb angeschlossenes Kabel mit einem Stecker in eine entsprechende Anschlussbuchse der Steuerungseinheit eingesteckt wird. Grundsätzlich kann diese signaltechnische Kopplung aber auch anders, zum Beispiel umgekehrt erfolgen, also indem ein Anschlussstecker der Steuerungseinheit in eine Anschlussbuchse des Förderantriebs beziehungsweise der Sensoreinheit eingesteckt wird oder indem eine drahtlose Signalübertragung eingerichtet wird. Insoweit ist im Zusammenhang mit der vorliegenden Beschreibung und den Patentansprüchen unter einer signaltechnischen Kopplung eine drahtgebundene oder drahtlose Signalübertragungsstrecke zu verstehen und unter einer Anschlussbuchse eine entsprechende Anschlusseinheit für eine drahtgebundene Verbindung oder ein entsprechendes Modul für eine drahtlose Signalverbindung.

Die Vornahme einer Installation oder die Änderung einer Installation einer Förderstrecke oder Fördervorrichtung muss zahlreichen Vorgaben und Restriktionen folgen, die sich aus baulichen Gegebenheiten, der Topologie der Förderstrecken in der Fördervorrichtung und den Eigenschaften der Steuerungseinheiten ergeben können. Zur Vereinfachung des Montageaufwands ist es bekannt, Steuerungseinheiten zu verwenden, die zwei, drei, vier oder noch mehr Fördersegmente ansteuern können und über Anschlussmöglichkeiten für entsprechend zwei, drei, vier oder noch mehr Förderantriebe und Sensoren verfügen. Solche Steuerungseinheiten können vollständig belegt werden, das heißt alle Anschlüsse werden signaltechnisch mit entsprechend Förderantrieben beziehungsweise Sensoren gekoppelt, können aber in bestimmten Einbausituationen auch nur teilweise belegt werden. Nach Herstellung der signaltechnischen Kopplungen ist es notwendig, dass ein Benutzer die Sensoren und Förderantriebe einander zuordnet. Dies kann erfolgen, indem bestimmte, entsprechend bezeichnete Anschlussbuchsen an der Steuerungseinheit für deren Anschluss verwendet werden, sodass sich die Zuordnung bereits aufgrund der Anschlussweise ergibt, kann aber auch in einem nachfolgenden Programmierschritt durch den Bediener erfolgen, wenn eine solche verbindungstechnische Zuordnung nicht möglich oder nicht gewünscht ist. Die verbindungstechnische Zuordnung wird in zahlreichen Anwendungsfällen als nachteilhaft empfunden, da sie die Flexibilität des Aufbaus der Förderstrecke einschränkt. So ist es beispielsweise für bestimmte Förderanwendungen notwendig, in einem Fördersegment zwei Förderantriebe vorzusehen, beispielsweise um eine erhöhte Förderkraft in Steigungsstrecken zu übertragen oder um besonders schwere Gegenstände zu fördern. In diesem Fall kann jedoch eine 1:1-Zuordnung von Förderantrieb und Sensor an der Steuerungseinheit nicht mehr auf verbindungstechnischem Weg durchgeführt werden, denn das Fördersegment wird regelmäßig über lediglich einen Sensor, jedoch zwei Förderantriebe verfügen.

Ein weiteres Problem im Zusammenhang mit der Installation von Förderstrecken und Fördervorrichtungen liegt darin, dass vom Benutzer unterschiedliche Arten von Sensoren eingesetzt werden. So ist es beispielsweise bekannt, NPN-Sensoren oder PNP-Sensoren einzusetzen, weiterhin ist es bekannt, Sensoren einzusetzen, die normal offen sind, also bei einem Zustand, in dem kein Objekt vor dem Sensor sitzt, ein logisches Signal "0" ausgeben und bei Vorhandensein eines Objekts ein logisches Signal "1" auszugeben, wohingegen bei anderen Sensoren, die normal geschlossen sind, die logischen Signale umgekehrt hierzu sind. Je nachdem, welcher Typ von Sensor eingesetzt wird, muss dies dann entweder in der Art der Verkabelung oder in der Art der Programmierung des Sensors beziehungsweise bei dessen Signalverarbeitung berücksichtigt werden. Installationsvorgänge nach dem Stand der Technik stellen sich daher als zeitintensiv dar und verursachen nennenswerte Stillstandszeiten von Fördervorrichtungen. Grundsätzlich besteht ein Zwiespalt darin, dass die Flexibilität in Form einer Anpassbarkeit der Fördervorrichtung an unterschiedliche Förderaufgaben und die Implementierung unterschiedlicher Förderantriebe und Sensoren erhöht werden soll, zugleich aber die Installation vereinfacht werden soll. Dabei kann eine vereinfachte Installation aber bislang nur durch Vereinfachung der Komponenten und damit einhergehende Reduzierung der Flexibilität erzielt werden.

Vor diesem Hintergrund liegt der Erfindung die Aufgabe zugrunde, die Installation von Fördervorrichtungen zu vereinfachen, ohne hierbei die flexiblen Einsatzmöglichkeiten zu beeinträchtigen.

Diese Aufgabe wird erfindungsgemäß mit einem Verfahren nach Anspruch 1, einem Verfahren nach Anspruch 13 und einer Verwendung einer Steuerungseinheit nach Anspruch 15 gelöst.

Erfindungsgemäß wird es ermöglicht, eine Fördervorrichtung zu installieren und einzurichten, die eine hohe Variabilität in dem Aufbau und der verwendeten Bauteile hat, und hierbei zugleich den Aufwand für die Installation deutlich zu verringern. Dies wird erfindungsgemäß erreicht, indem durch die Steuerungseinheit eine Eigenkonfiguration durchgeführt wird. Bei dieser Eigenkonfiguration wird die Steuerungseinheit zunächst in einen Konfigurationsmodus versetzt. Diese Aktivierung des Konfigurationsmodus stellt einen Aufruf bestimmter Ablaufroutinen und Schaltungen in der Steuerungseinheit dar. Grundsätzlich kann die Aktivierung des Konfigurationsmodus solcherart erfolgen, dass bei jedem Einschalten der Steuerungseinheit eine Selbstdiagnose durchgeführt wird und die Steuerungseinheit darin prüft, ob eine Eigenkonfiguration erforderlich ist, beispielsweise weil nicht konfigurierte Komponenten identifiziert wurden, die an die Steuerungseinheit angeschlossen sind oder weil zuvor konfigurierte Komponenten nicht mehr angeschlossen sind. Insbesondere ist es aber bevorzugt, dass der Konfigurationsmodus an der Steuerungseinheit aktiv ausgelöst werden kann, beispielsweise durch Fernübermittlung eines Befehls an die Steuerungseinheit, durch Betätigen eines Knopfes oder Schalters an der Steuerungseinheit oder durch Betätigen eines Magnetkontakts wie eines HallSensors oder eines Reed-Kontaktes mittels eines Magneten.

Nachdem die Steuerungseinheit in den Konfigurationsmodus versetzt wurde, werden durch eine die Konfiguration abarbeitende elektronische Prozessoreinheit Signale von Anschlussbuchsen der Steuerungseinheit empfangen und verarbeitet. Diese Anschlussbuchsen können Motoranschlussbuchsen sein, an welche Förderantriebe, Aus- oder Einschleuseantriebe, Hebeantriebe und dergleichen angeschlossen werden können. Weiterhin können diese Anschlussbuchsen Sensoranschlussbuchsen sein, an die jegliche Art von Sensor oder Signalgeber wie Lichtschranken, Lichttaster, Wegsensoren, Taster und dergleichen angeschlossen werden können.

Die Signale, die von diesen Anschlussbuchsen durch die Prozessoreinheit empfangen werden, können je nach Konfigurationszweck und Konfigurationsweise unterschiedlich sein. Beispielsweise können von der Prozessoreinheit an jede Anschlussbuchse Signale in Form einer Spannungsbeaufschlagung bestimmter Kontakte der Anschlussbuchse gesendet werden und daraufhin seitens der Prozessoreinheit überprüft werden, ob daraufhin zu erwartende Signale von diesen oder anderen Kontakten der Anschlussbuchse in Form einer Spannung, eines Stroms oder dergleichen empfangen werden. Die Signale können darin bestehen, dass eine Spannung oder ein Strom überhaupt messbar ist oder nicht messbar ist, sie können quantitativ in der Höhe einer Spannung oder eines Stroms liegen oder in sonstigen Signalverläufen wie einem bestimmten zeitlichen Verlauf, beispielsweise einem konstanten oder sprunghaften Anstieg oder Abfall einer Spannung oder eines Stroms, liegen.

Die so empfangenen Signale werden innerhalb der Prozessoreinheit mit einem Vergleichswert verglichen. Ein solcher Vergleichswert kann ein absoluter Wert in Form eines Sollwertes, einer Grenze oder eines Grenzbereichs oder eine Wertetabelle sein, kann aber auch einen Verlauf von Werten über die Zeit darstellen, um entsprechend empfangene Signalverläufe damit zu vergleichen.

Aus diesem Vergleich wird dann erfindungsgemäß bestimmt, ob an die Anschlussbuchse ein Bauteil wie ein Förderantrieb oder ein Sensor angeschlossen ist. Darüber hinaus kann auch bestimmt werden, welcher Typ von Bauteil an die Anschlussbuchse angeschlossen ist. Mit dem erfindungsgemäßen Verfahren wird es somit möglich, ohne einen manuellen Programmiereingriff des Benutzers eine schnelle Darstellung und Installation der an eine Steuerungseinheit angeschlossenen Bauteile wie Förderantriebe und Sensoren durchzuführen. Diese Analyse und Eigenkonfiguration erfolgt selbsttätig durch die entsprechend programmierte Prozessoreinheit in der Steuerungseinheit nach Aktivieren des Konfigurationsmodus. Die Eigenkonfiguration kann unabhängig voneinander für jede Steuerungseinheit, die in einer Förderstrecke oder Fördervorrichtung verbaut ist, erfolgen, insbesondere kann sie gleichzeitig für mehrere oder alle Steuerungseinheiten in einer solchen Fördervorrichtung erfolgen, sodass hierdurch erheblich Zeit und Aufwand seitens des Benutzers eingespart werden kann. Es ist insbesondere möglich, das Aktivierungssignal für den Konfigurationsmodus an einer Steuerungseinheit auszulösen und von dieser ausgehend über eine entsprechende Kommunikation zwischen den Steuerungseinheiten, beispielsweise eine Buskommunikation, weiterzugeben, sodass auch die übrigen Steuerungseinheiten auf dieses einmal ausgelöste Signal hin in den Konfigurationsmodus wechseln und eine Eigenkonfiguration durchführen.

Gemäß einer ersten bevorzugten Ausführungsform ist vorgesehen, dass in Schritt ii) als Signal ein Störsignal von jeder Motoranschlussbuchse durch die Prozessoreinheit abgefragt wird, in Schritt iii) verglichen wird, ob ein Störsignal empfangen wurde oder ob kein Störsignal empfangen wurde und in Schritt iv) für jede Motoranschlussbuchse bei fehlendem Empfang eines Störsignals ein angeschlossener Förderantrieb an der Motoranschlussbuchse bestimmt wird und bei Empfang eines Störsignals ein nicht angeschlossener Förderantrieb an der Motoranschlussbuchse bestimmt wird, oder dass in Schritt i) alle an die Steuerungseinheit angeschlossenen Förderantriebe aktiviert werden, in Schritt ii) als Signal ein Aktivitätssignal, vorzugsweise ein Motorbetriebsstrom oder ein Sensorsignal eines mit dem Förderantrieb mechanisch gekoppelten Sensors an jeder Motoranschlussbuchse in der Prozessoreinheit empfangen wird, in Schritt iii) das empfangene Aktivitätssignal mit einem Sollwert als Vergleichswert vergleichen wird, und in Schritt iv) bei Vorhandensein eines Aktivitätssignals bestimmt wird, dass ein Förderantrieb an der Motoranschlussbuchse angeschlossen ist und bei Nicht-Vorhandensein eines Aktivitätssignals bestimmt wird, dass kein Förderantrieb an der Motoranschlussbuchse angeschlossen ist. Der Sensor kann beispielsweise ein Drehimpulsgeber sein und die Impulse dieses am Motor oder der Fördervorrichtung angekoppelten Drehimpulsgebers als Aktivitätssignal ausgewertet werden.

Gemäß dieser Ausführungsform wird das Vorhandensein eines Förderantriebs im Anschluss an eine Motoranschlussbuchse detektiert, indem entweder ein Störsignal von jeder Motoranschlussbuchse abgefragt wird oder indem über die zu prüfende Motoranschlussbuchse versucht wird, einen daran angeschlossenen Förderantrieb zu aktivieren und ein Aktivitätssignal von diesem zu empfangen. Grundsätzlich kann mit dieser Vorgehensweise sicher bestimmt werden, ob ein Förderantrieb an die Motoranschlussbuchse angeschlossen ist. So erzeugt ein ordnungsgemäß angeschlossener Motor kein Störsignal, wohingegen eine Motoranschlussbuchse, die nicht genutzt ist, weil dort ein Förderantrieb nicht oder falsch angeschlossen ist, ein solches Störsignal erzeugt und damit ein für die Prozessoreinheit auswertbares Signal abgibt. Ebenso kann bei dem Versuch der Einschaltung von Motoren erfasst und ausgewertet werden, an welchen Motoranschlussbuchsen ein Stromfluss vorhanden ist, der auf einen angeschlossenen Förderantrieb hinweist und an welchen Motoranschlussbuchsen ein solcher Stromfluss nicht vorhanden ist, woraus zu schließen ist, dass kein Förderantrieb angeschlossen ist. Ebenso können in Schritt i) alle an die Steuerungseinheit angeschlossenen Förderantriebe aktiviert werden und in Schritt ii) ein Signal eines Sensors wie eines Drehimpulsgebers an jeder Motoranschlussbuchse in der Prozessoreinheit empfangen werden, in Schritt iii) die empfangenen Aktivitätssignale, also Motorbetriebsstrom oder Sensorsignal mit einem Sollwert als Vergleichswert verglichen werden, und in Schritt iv) bei Vorhandensein eines entsprechenden Aktivitätssignals auf einen angeschlossenen Förderantrieb an der Motoranschlussbuchse rückgeschlossen wird und bei Nicht-Vorhandensein eines Drehimpulswertes auf einen nicht angeschlossenen Förderantrieb an der Motoranschlussbuchse rückgeschlossen wird,

Noch weiter ist es bevorzugt, dass die Steuerungseinheit mehrere Motoranschlussbuchsen aufweist und nach Schritt iv) ein Belegungsplan der Motoranschlussbuchsen ermittelt wird und mit einem Soll-Belegungsplan verglichen wird, der für jede mögliche Anzahl von angeschlossenen Förderantrieben ein Sollbelegungsmuster umfasst, und dass bei Abweichen von dem Sollbelegungsmuster eine Fehlermeldung durch die Prozessoreinheit ausgegeben wird, insbesondere ein optisches oder ein akustisches Signal. Diese Ausführungsform ermöglicht es, an einer Steuerungseinheit, an die mehrere Förderantriebe angeschlossen werden können, schnell eine korrekte Installation vorzunehmen und zu prüfen. Hierbei wird durch die Prozessoreinheit überprüft, an welche Motoranschlussbuchsen ein Förderantrieb angeschlossen ist. Bei korrekter Belegung der Motoranschlussbuchsen ist dieser Konfigurationsschritt abgeschlossen, ist jedoch bei einem Anschluss von insgesamt beispielsweise zwei Förderantrieben an eine Steuerungseinheit mit beispielsweise vier Motoranschlussbuchsen die erste und dritte oder erste und vierte Motoranschlussbuchse belegt, so wird ein Fehlermeldung wie ein optisches oder akustisches Signal ausgegeben, um dem Bediener die fehlerhafte Anschlussweise zu signalisieren, sodass der Bediener auf eine korrekte Anschlussweise mit Belegung der ersten und zweiten Motoranschlussbuchse die Installation modifizieren kann. Das dabei ausgegebene akustische oder optische Signal kann durch eine entsprechende Signalvorrichtung, die Bestandteil der Steuerungseinheit ist, ausgegeben werden, beispielsweise ein Lichtsignal einer Leuchtdiode oder ein Summton. Bevorzugt ist es, als optisches Signal eine bestimmte Bewegungssequenz des fehlerhaft angeschlossenen Förderantriebs durch die Prozessoreinheit zu veranlassen, beispielsweise eine Sequenz von kurzen Vorwärts- und Rückwärtsbewegungen dieses Förderantriebs, unterbrochen von Pausen in einer vorbestimmten Sequenz, die dem Benutzer einerseits signalisiert, dass eine fehlerhafte Installation vorliegt, andererseits unmittelbar den falsch installierten Förderantrieb anzeigt.

Gemäß einer weiteren bevorzugten Ausführungsform ist vorgesehen, dass in Schritt ii) als Signal ein Störsignal von jeder Sensoranschlussbuchse durch die Prozessoreinheit abgefragt wird, in Schritt iii) verglichen wird, ob ein Störsignal empfangen wurde oder ob kein Störsignal empfangen wurde und in Schritt iv) für jede Sensoranschlussbuchse bei fehlendem Empfang eines Störsignals ein angeschlossener Sensor an der Sensoranschlussbuchse bestimmt wird und bei Empfang eines Störsignals ein nicht angeschlossener Sensor an der Sensoranschlussbuchse bestimmt wird, oder in Schritt i) alle an die Steuerungseinheit angeschlossenen Sensoren aktiviert werden, in Schritt ii) als Signal ein Sensorsignal an jeder Sensoranschlussbuchse in der Prozessoreinheit empfangen wird, in Schritt iii) das empfangene Sensorsignal mit einem Sollwert als Vergleichswert vergleichen wird, und in Schritt iv) bei Vorhandensein eines Sensorsignals ein angeschlossener Sensor an der Sensoranschlussbuchse bestimmt wird und bei Nicht-Vorhandensein eines Sensorsignals ein nicht angeschlossener Sensor an der Sensoranschlussbuchse bestimmt wird. Gemäß dieser Ausführungsform wird wiederum das Vorhandensein von angeschlossenen Sensoren an den Sensoranschlussbuchsen detektiert, indem ein Störsignal von der entsprechend abgefragten Sensoranschlussbuchse empfangen wird, oder es wird ein Aktivierungssignal an die entsprechende Sensoranschlussbuchse gesendet und geprüft, wie die weiteren oder ein anderer Kontakt der Sensoranschlussbuchse auf dieses Aktivierungssignal reagiert. Diese Überprüfungsweise ist analog zu der voranstehend erläuterten Überprüfungsweise der an die Motoranschlussbuchsen angeschlossenen Förderantriebe mittels Störsignal beziehungsweise Beaufschlagung mit einem Motorbetriebsstrom und kann ebenso dazu führen, aus dem Vorhandensein eines Störsignals auf eine nicht belegte Sensoranschlussbuchse zu schließen oder aus dem Empfang eines Signals von einem Kontakt der Sensoranschlussbuchse bei Beaufschlagung dieses oder eines anderen Kontakts mit einem Aktivierungssignal auf einen an diese Sensoranschlussbuchse angeschlossenen Sensor zu schließen.

Nach der Erfindung ist es notwendig, dass die Steuerungseinheit mehrere Sensoranschlussbuchsen aufweist und nach Schritt iv) ein Belegungsplan der Sensoranschlussbuchsen ermittelt wird und mit einem Soll-Belegungsplan verglichen wird, der für jede mögliche Anzahl von angeschlossenen Sensoren ein Sollbelegungsmuster umfasst, und dass bei Abweichen von dem Sollbelegungsmuster eine Fehlermeldung durch die Prozessoreinheit ausgegeben wird, insbesondere ein optisches oder ein akustisches Signal. Diese Ausführungsform ermöglicht es, bei Steuerungseinheiten, die mehrere Sensoranschlussbuchsen aufweisen, die Anzahl der angeschlossenen Sensoren und das Belegungsmuster der Sensoranschlussbuchsen in der Eigenkonfiguration zu erfassen und eine fehlerhafte Belegung der Sensoranschlussbuchsen anzuzeigen. Wie zuvor kann die Anzeige durch ein optisches oder akustisches Signal erfolgen und ermöglicht es dem Benutzer, eine fehlerhafte Installation schnell zu erkennen und zu beheben.

Es ist weiterhin bei Vorhandensein mehrerer Sensoranschlussbuchsen und mehrerer Motoranschlussbuchsen an der Steuerungseinheit bevorzugt, wenn die Prozessoreinheit die Anzahl der erkannten Sensoren mit der Anzahl der erkannten Förderantriebe vergleicht und eine Fehlermeldung erzeugt, wenn die Anzahl der erkannten Sensoren größer ist als die Anzahl der erkannten Förderantriebe. Grundsätzlich ist es für einen funktionsfähigen Aufbau einer Förderstrecke bevorzugt, wenn jedem Sensor ein Förderantrieb zugeordnet ist und diese so ein Fördersegment bilden können. In diesem Fall kann ein logischer Zusammenhang zwischen der Aktivierung dieses Förderantriebs aus dem Sensorsignal durch die Steuerungseinheit gesteuert werden. Um diese Steuerungsweise vorzunehmen, ist eine logische Zuordnung des entsprechenden Förderantriebs zu dem entsprechenden Sensor in der Steuerungseinheit vorzunehmen, um das entsprechende Fördersegment zu definieren. Wird hingegen festgestellt, dass einem Förderantrieb kein Sensor zugeordnet ist oder einem Sensor kein Förderantrieb zugeordnet ist, so stellt dies eine unvollständige Konfiguration der Fördervorrichtung dar und kann im ungünstigen Fall zu einer fehlerhaften Förderung von Gegenständen mittels der Fördervorrichtung führen. In diesem Fall wird eine Fehlermeldung ausgegeben, die wie zuvor in einem akustischen oder optischen Signal bestehen kann.

Gemäß einer weiteren bevorzugten Ausführungsform ist vorgesehen, dass die Steuerungseinheit zum Anschluss und zur Verarbeitung von Sensorsignalen unterschiedlicher Sensortypen ausgebildet ist und der Sensortyp ermittelt wird, indem jede Sensoranschlussbuchse durch die Prozessoreinheit mit einem vorbestimmten Ausgangssignal beaufschlagt wird, von jeder Sensoranschlussbuchse durch die Prozessoreinheit ein Eingangssignal empfangen wird, das empfangene Eingangssignal mit einem vorbestimmten Sollwert verglichen wird, und anhand des Vergleichs des empfangenen Sensorsignals mit dem vorbestimmten Sollwert der Sensortyp bestimmt wird. Grundsätzlich ist die erfindungsgemäße Fördervorrichtung und das erfindungsgemäße Verfahren zur Einrichtung der Fördervorrichtung geeignet, um Sensoren unterschiedlichen Typs zu implementieren. Sensoren können in Fördervorrichtungen unterschiedlicher Aufgaben übernehmen. Sie können als Hauptaufgabe erfassen, ob sich ein geförderter Gegenstand in einem Bereich befindet oder nicht, hierzu kommen beispielsweise Lichtschranken oder Lichttaster zum Einsatz. Andere Sensoren können Positionsabfragen von Ausschleusern oder Einschleusern oder Hebeeinrichtungen oder dergleichen ausführen, Barcodes oder RFID-Tags an geförderten Gegenständen auslesen oder dergleichen. Erfindungsgemäß ist vorgesehen, dass diese unterschiedlichen Typen von Sensoren an die Steuerungseinheit angeschlossen werden können und durch die Steuerungseinheit bei der Eigenkonfiguration erkannt wird, welcher Typ von Sensor angeschlossen ist. Dies dient dazu, um die Sensordaten im späteren Betrieb der Fördervorrichtung korrekt zu interpretieren und zu verarbeiten und um gegebenenfalls eine Darstellung, Visualisierung oder Aufstellung der Fördervorrichtung zu erreichen, die beispielsweise auf einer zentralen Rechnereinheit, die mit den Steuerungseinheiten der Fördervorrichtung in signaltechnischer Kopplung steht, ausgeführt werden kann.

Um den Sensortyp zu ermitteln wird eine Sensoranschlussbuchse mit einem Ausgangssignal beaufschlagt und ein Eingangssignal von der Sensoranschlussbuchse bzw. dem daran angeschlossenen Sensor empfangen. Das Eingangssignal, gegebenenfalls auch das Ausgangssignal, werden dann mit einem vorbestimmten Sollwert beziehungsweise vorbestimmten Sollwerten verglichen und hieraus kann bereits eine grundsätzliche Unterscheidung unterschiedlicher Sensortypen erfolgen und folglich ein Sensortyp für den angeschlossenen Sensor bestimmt werden. Der Vorgang kann insbesondere dadurch verbessert werden und die Differenzierung mehrerer unterschiedlicher Sensortypen ermöglichen, indem vor der Durchführung dieser Schritte ein bestimmter Detektionszustand des Sensors hergestellt wird, beispielsweise indem vor einen Sensor, der die Anwesenheit eines Gegenstands erfassen soll, ein Gegenstand platziert wird oder der Sensor bewusst freigestellt wird oder indem Wegsensoren an einen Endanschlag bewegt werden oder dergleichen. Zu diesem Zweck kann der Bediener mittels eines geeigneten, von der Prozessoreinheit ausgegebenen Signals, veranlasst werden, den Detektionszustand herzustellen, indem er einen Gegenstand vor dem Sensor platziert oder den Sensor freistellt. Weiterhin kann das Verfahren verbessert werden und eine noch weitere Differenzierung von unterschiedlichen Sensortypen ermöglichen, indem vor den Konfigurationsschritten zunächst ein erster Detektionszustand hergestellt wird, danach ein zweiter Detektionszustand hergestellt wird und die Konfigurationsschritte wiederholt werden. So kann durch eine differenzierte logische Prüfung von Eingangs- und Ausgangssignal bei unterschiedlichen Detektionszuständen des Sensors, also beispielsweise bei Anwesenheit eines Gegenstands vor dem Sensor und bei Freistellung des Sensors, also Abwesenheit eines Gegenstands vor dem Sensor aus den Ein- und Ausgangssignalen des Sensors auf dessen Typ geschlossen werden und unterschiedliche Sensortypen differenziert werden. Grundsätzlich kann es mit diesen Maßnahmen möglich sein, Sensortypen wie PNP-Sensoren von NPN-Sensoren zu unterscheiden und Sensortypen vom "normal offen" Typus von Sensoren vom "normal geschlossen" Typus zu unterscheiden.

Noch weiter ist es dabei bevorzugt, wenn die Sensortypen sich dadurch unterscheiden, dass ein Sensortyp NPN-konfiguriert ist und ein anderer Sensortyp PNP-konfiguriert und/ oder dass die Sensortypen sich dadurch unterscheiden, dass ein Sensortyp Normal-Offen-konfiguriert ist und ein anderer Sensortyp Normal-Geschlossen-konfiguriert ist. Gemäß dieser Ausführungsform werden Sensortypen, die für die erfindungsgemäße Fördervorrichtung sich als besonders geeignet erwiesen haben, in der Eigenkonfiguration unterschieden beziehungsweise identifiziert. Diese Unterscheidung und Differenzierung kann gemäß den zuvor beschriebenen Schritten erfolgen.

Noch weiter ist es bevorzugt, dass das vorbestimmte Ausgangssignal durch eine Programmierung der Sensoranschlussbuchse auf positive Schaltlogik und PNP beaufschlagt wird, und dass das Eingangssignal durch die Prozessoreinheit in einen Logikwert interpretiert wird und anhand dieses Logikwertes mit einem vorbestimmten Sollwert verglichen wird und dass alle Sensoranschlussbuchsen, von denen ein einem Logikwert "1" entsprechendes Eingangssignal empfangen wird, als Sensortyp PNP, Normal Geschlossen, bestimmt wird. Diese Ausführungsform ermöglicht es, einen Sensortyp anhand von logischen (booleschen) Verknüpfungen eindeutig zu identifizieren, indem Ausgangssignale des Sensors in Abhängigkeit einer bestimmten Programmierung ausgelesen und in Logikwerte überführt werden und dann anhand eines Vergleichs, beispielsweise anhand einer Vergleichstabelle, diese Logikwerte mit bestimmten Logikmustern der Verhaltensweise bestimmter Sensortypen verglichen wird und der Sensortyp so eindeutig bestimmt werden kann.

Gemäß einer weiteren bevorzugten Ausführungsform ist vorgesehen, dass der Sensor durch die Prozessoreinheit überwacht wird, in einem ersten Konfigurationsschritt der Sensor frei ist und ein erstes Eingangssignal des Sensors durch die Prozessoreinheit empfangen wird, und in einem zweiten Konfigurationsschritt der Sensor mit einem in dem Fördersegment angeordneten Objekt belegt wird und ein zweites Eingangssignal des Sensors durch die Prozessoreinheit empfangen wird, und die Bestimmung des Sensortypes mittels einer logische Auswertung des ersten und des zweiten Eingangssignals durch die Prozessoreinheit erfolgt. Mit dieser Fortbildung wird die Bestimmung des Sensortyps anhand von zwei Analyseschritten durchgeführt, bei einem der beiden Analyseschritte ist der Sensor belegt, beim anderen ist der Sensor frei. Dies kann erfolgen, indem ein Benutzer ein Objekt vor den Sensor platziert oder mit seiner Hand den Sensor auslöst, um die Belegung des Sensors zu simulieren. Die Reihenfolge der beiden Analyseschritte ist hierbei für das Ergebnis nicht von Bedeutung. Der Benutzer kann insbesondere durch ein von der Prozessoreinheit erzeugtes Signal dazu aufgefordert werden, den Sensor zu belegen beziehungsweise freizustellen, um die Abfolge der beiden Analyseschritte durchzuführen.

Noch weiter ist es bevorzugt, wenn die Steuerungseinheit mehrere Sensoranschlussbuchsen und mehrere Motoranschlussbuchsen aufweist und nach Schritt iv) ein Zuordnungssplan der angeschlossenen Sensoren zu den angeschlossenen Förderantrieben ermittelt wird, mit den Schritten: Aufsetzen eines Objekts in ein Fördersegment und Aktivieren des Förderantriebs des Fördersegments in einer ersten Förderrichtung, Überwachen der Sensorsignale durch die Prozessoreinheit, und Zuordnen des Förderantriebs zu einem Sensor, der nach Aktivieren des Förderantriebs sein Signal ändert, durch die Prozessoreinheit. Grundsätzlich besteht eine Förderstrecke beziehungsweise Fördervorrichtung aus mehreren Fördersegmenten, wie zuvor erläutert. Jedes Fördersegment umfasst dabei zumindest einen Förderantrieb und einen Sensor. Durch die Steuerungseinheit wird ein solches Fördersegment angesteuert. Hierbei wird in bestimmten Steuerungsweisen das Sensorsignal aus dem Fördersegment verarbeitet und in Abhängigkeit von diesem Sensorsignal der Förderantrieb angesteuert. In anderen Steuerungsweisen wird das Sensorsignal eines stromabwärts von diesem Fördersegment direkt benachbart liegenden Fördersegments überwacht und in Abhängigkeit von diesem Sensorsignal aus dem stromabwärts benachbarten Fördersegment der Förderantrieb angesteuert. Aus diesen Steuerungsweisen ist es im Allgemeinen erforderlich, einen Sensor einem Förderantrieb zuzuordnen, um diese Abhängigkeiten der Steuerungsweisen durch die Steuerungseinheit logisch ausführen zu können. Gemäß dieser Fortbildung wird die Zuordnung von Sensoren im Rahmen der Eigenkonfiguration durchgeführt. Hierzu werden bestimmte Konfigurationsschritte ausgeführt, bei denen ein in einem Fördersegment platzierter Gegenstand durch Aktivierung eines bestimmten Förderantriebs gefördert wird und die Sensoren innerhalb der Förderstrecke oder Fördervorrichtung insgesamt überwacht werden. Der durch den geförderten Gegenstand ausgelöste Sensor, gegebenenfalls der durch den geförderten Gegenstand zuerst ausgelöste Sensor kann dann in eine Zuordnung zu den Förderantrieb gesetzt werden. Es kann eine solche Zuordnung erfolgen, indem dieser Sensor und der aktivierte Förderantrieb zu einem Fördersegment logisch verknüpft werden. Die Zuordnung kann auch darin bestehen, dass dieser Sensor und der aktivierte Förderantrieb in eine logische Steuerungsabhängigkeit zueinander gesetzt werden. Allgemein ist zu verstehen, dass die Herstellung der logischen Steuerungszusammenhänge aufgrund der Möglichkeit, dass die Steuerungseinheit auch um einander benachbarte Fördersegmente und die Reihenfolge der Anordnung der einzelnen Fördersegmente Kenntnis hat und diese entsprechend verarbeiten kann, je nach gewünschten Steuerungsweisen die für die Steuerung notwendigen logischen Zusammenhänge zwischen den Sensoren und den Förderantrieben einstellen kann beziehungsweise entsprechend programmiert werden kann. So genügt es für umfassende Programmierungsmöglichkeiten, wenn der Steuerungseinheit der jeweils in einem Fördersegment vorhandene Förderantrieb und Sensor in Zuordnung zueinander bekannt sind und die Reihenfolge beziehungsweise benachbarte Fördersegmente entlang der Förderstrecke bekannt sind, zumindest in einem solchen Ausmaß, dass die Steuerungseinheit Kenntnis über die von ihr gesteuerten Fördersegmente sowie das hierzu direkte stromabwärts benachbarte Fördersegment und gegebenenfalls das hierzu stromaufwärts direkt benachbarte Fördersegment hat. In diesem Fall kann für die mit der erfindungsgemäßen Fördervorrichtung bevorzugt zu verwirklichenden Förderungssteuerungen nach dem Einzelplatzabzug oder nach dem Blockabzug die notwendigen Zusammenhänge zwischen den Sensorsignalen und der Ansteuerung der Förderantriebe durch die Steuerungseinheit geknüpft werden.

Noch weiter ist es bevorzugt, dass ein Zusatzantrieb des Fördersegment erkannt und zugeordnet wird, durch die Schritte Signalisieren des nicht zugeordneten Zusatzantriebs einem Bediener, indem ein optisches oder akustisches Signal, insbesondere eine vorbestimmte Abfolge von Start-Stopp Vorgängen des Zusatzantriebs durch die Prozessoreinheit ausgegeben wird, Überwachen der Sensorsignale durch die Prozessoreinheit, manuelles Auslösen des Sensors durch den Bediener, und Zuordnen des manuell ausgelösten Sensors zu dem Zusatzmotor durch die Prozessoreinheit. Mit dieser Fortbildung wird eine direkte Zuordnung von Sensoren zu einem bestimmten Fördersegment erreicht, in dem der Bediener nach entsprechender Aufforderung durch ein Signal der Prozessoreinheit den Sensor auslöst. Grundsätzlich ist zu verstehen, dass hiermit der Sensor eines Fördersegments den Förderantrieb dieses selben Fördersegments eindeutig zugeordnet werden kann und diese Zuordnung in der Steuerungseinheit abgespeichert werden kann. Ebenso gut ist es aber möglich, dass mit dieser Vorgehensweise der Sensor des direkt benachbarten stromabwärts liegenden Fördersegments den Förderantrieb des dazu stromaufwärts liegenden Fördersegments zugeordnet wird und diese Zuordnung in der Steuerungseinheit gespeichert wird.

Bei den voranstehenden bevorzugten Ausführungsformen mit einer Überwachung der Sensorsignale durch die Prozessoreinheit ist es besonders bevorzugt, wenn während dieser Überwachung die Sensoransteuerung fortlaufend zwischen Sensortyp PNP und Sensortyp NPN umgeschaltet wird. Mittels dieser Überwachung kann in einfacher Weise, bei entsprechend logischer Auswertung der Sensorsignale, der Sensortyp bestimmt werden, da hierdurch bei normalem Verlauf des Fördervorgangs vier unterschiedliche Konstellationen logisch ausgewertet werden können, nämlich ein freier Sensor in PNP und NPN Ansteuerung sowie ein belegter Sensor in PNP und NPN Ansteuerung. Aus diesen vier Analyseschritten ist es regelmäßig möglich, den Sensortyp eindeutig zu bestimmen.

Ein weiterer Aspekt der Erfindung ist ein Verfahren nach Anspruch 13.

Gemäß dieser Ausführungsform wird dem Benutzer ein fehlerhafter oder ein korrekter Installationszustand durch eine Bewegungsfolge des Förderantriebs signalisiert. Diese Bewegungsfolge kann im einfachsten Fall ein konstanter Lauf des Förderantriebs sein, kann aber auch in Form vorbestimmter Sequenzen aus kurzen Start-Stopp-Vorgängen, Hin- und Herbewegungen und/oder Bewegungspausen ausgebildet sein. Die Eigenkonfiguration kann dabei im einfachsten Fall in einer Eigenanalyse, beispielsweise einer Überprüfung der Anschlussweise oder -konfiguration liegen, kann aber ebenso auch weitergehende Konfigurationsschritte wie eine interne Programmierung, Parametersetzung und dergleichen umfassen. Signalisiert werden kann ein fehlerhaft installierter Förderantrieb, insbesondere indem genau dieser Förderantrieb die Bewegungsfolge ausführt. Signalisiert werden kann auch ein fehlerhaft installierter Sensor, insbesondere indem ein diesem Sensor in dem Fördersegment zugeordneter Förderantrieb die Bewegungsfolge ausführt. Dabei kann die Bewegungsfolge für einen fehlerhaft installierten Förderantrieb vorzugsweise eine andere Bewegungsfolge sein als diejenige für einen fehlerhaft installierten Sensor.

Desweiteren kann die Bewegungsfolge auch für korrekt installierte Förderantriebe oder Sensoren eingesetzt werden, beispielsweise als Bestätigung der korrekten Installation. Auch hier können Bewegungsfolgen aus den zuvor erläuterten Elementen eingesetzt werden, insbesondere von den vorgenannten verschiedenen Bewegungsfolgen.

Das vorgenannte Verfahren kann fortgebildet werden, indem die Eigenkonfiguration nach einem Verfahren der zuvor beschriebenen Art durchgeführt wird und das optische Signal vorzugsweise die Fehlermeldung oder das optische Signal dieser Eigenkonfiguration ausbildet.

Ein weiterer Aspekt der Erfindung ist eine Verwendung einer Steuerungseinheit nach Anspruch 15.

Diese Fördervorrichtung kann fortgebildet werden, in dem die Prozessoreinheit ausgebildet ist, um : In Schritt ii) als Signal ein Störsignal von jeder Motoranschlussbuchse durch die Prozessoreinheit abzufragen, in Schritt iii) zu vergleichen, ob ein Störsignal empfangen wurde oder ob kein Störsignal empfangen wurde und in Schritt iv) für jede Motoranschlussbuchse bei fehlendem Empfang eines Störsignals zu bestimmen, dass ein Förderantrieb an der Motoranschlussbuchse angeschlossen ist und bei Empfang eines Störsignals zu bestimmen, dass kein Förderantrieb an der Motoranschlussbuchse angeschlossen ist, oder in Schritt i) alle an die Steuerungseinheit angeschlossenen Förderantriebe zu aktivieren, in Schritt ii) als Signal ein Aktivitätssignal, insbesondere einen Motorbetriebsstrom oder ein Signal eines mit dem Förderantrieb mechanisch gekoppelten Sensors an jeder Motoranschlussbuchse in der Prozessoreinheit zu empfangen, in Schritt iii) der empfangene Motorbetriebsstrom mit einem Sollwert als Vergleichswert zu vergleichen, und in Schritt iv) bei Vorhandensein eines Aktivitätssignals zu bestimmen, dass ein Förderantrieb an der Motoranschlussbuchse angeschlossen ist und bei Nicht-Vorhandensein eines Aktivitätssignals zu bestimmen, dass kein Förderantrieb an der Motoranschlussbuchse angeschlossen ist

Diese Fördervorrichtung kann fortgebildet werden, indem die Steuerungseinheit mehrere Motoranschlussbuchsen aufweist und die Prozessoreinheit ausgebildet ist um nach Schritt iv) einen Belegungsplan der Motoranschlussbuchsen zu ermitteln und mit einem Soll-Belegungsplan zu vergleichen, der für jede mögliche Anzahl von angeschlossenen Förderantrieben ein Sollbelegungsmuster umfasst, und bei Abweichen von dem Sollbelegungsplan eine Fehlermeldung auszugeben, insbesondere ein optisches oder ein akustisches Signal.

Diese Fördervorrichtung kann fortgebildet werden, indem die Prozessoreinheit ausgebildet ist um In Schritt ii) als Signal ein Störsignal von jeder Sensoranschlussbuchse durch die Prozessoreinheit abzufragen, in Schritt iii) zu vergleichen, ob ein Störsignal empfangen wurde oder ob kein Störsignal empfangen wurde und in Schritt iv) für jede Sensoranschlussbuchse bei fehlendem Empfang eines Störsignals zu bestimmen, dass ein Sensor an der Sensoranschlussbuchse angeschlossen ist und bei Empfang eines Störsignals zu bestimmen, dass kein Sensor an der Sensoranschlussbuchse angeschlossen ist, oder in Schritt i) alle an die Steuerungseinheit angeschlossenen Sensoren zu aktivieren, in Schritt ii) als Signal ein Sensorsignal an jeder Sensoranschlussbuchse in der Prozessoreinheit zu empfangen, in Schritt iii) das empfangene Sensorsignal mit einem Sollwert als Vergleichswert zu vergleichen, und in Schritt iv) bei Vorhandensein eines Sensorsignals zu bestimmen, dass ein Sensor an der Sensoranschlussbuchse angeschlossen ist und bei Nicht-Vorhandensein eines Sensorsignals zu bestimmen, dass kein Sensor an der Sensoranschlussbuchse angeschlossen ist

Diese Fördervorrichtung kann fortgebildet werden, indem die Prozessoreinheit ausgebildet ist, um die Anzahl der erkannten Sensoren mit der Anzahl der erkannten Förderantriebe zu vergleichen und eine Fehlermeldung zu erzeugen, wenn die Anzahl der erkannten Sensoren größer ist als die Anzahl der erkannten Förderantriebe.

Diese Fördervorrichtung kann fortgebildet werden, indem die Steuerungseinheit zum Anschluss und zur Verarbeitung von Sensorsignalen unterschiedlicher Sensortypen ausgebildet ist und die Prozessoreinheit ausgebildet ist um den Sensortyp zu ermitteln wird, indem
- Jede Sensoranschlussbuchse durch die Prozessoreinheit mit einem vorbestimmten Ausgangssignal beaufschlagt wird,
- Von jeder Sensoranschlussbuchse durch die Prozessoreinheit ein Eingangssignal empfangen wird,
- das empfangene Eingangssignal mit einem vorbestimmten Sollwert verglichen wird, und
anhand des Vergleichs des empfangenen Sensorsignals mit dem vorbestimmten Sollwert der Sensortyp bestimmt wird

Diese Fördervorrichtung kann fortgebildet werden, indem die Sensortypen sich dadurch unterscheiden, dass ein Sensortyp NPN-konfiguriert ist und ein anderer Sensortyp PNP-konfiguriert und/ oder dass die Sensortypen sich dadurch unterscheiden, dass ein Sensortyp Normal-Offen-konfiguriert ist und ein anderer Sensortyp Normal-Geschlossen-konfiguriert ist.

Diese Fördervorrichtung kann fortgebildet werden, indem die Prozessoreinheit ausgebildet ist um das vorbestimmte Ausgangssignal durch eine Programmierung der Sensoranschlussbuchse auf positive Schaltlogik und PNP zu beaufschlagen, und das Eingangssignal durch die Prozessoreinheit in einen Logikwert zu interpretieren und anhand dieses Logikwertes mit einem vorbestimmten Sollwert zu vergleichen und alle Sensoranschlussbuchsen, von denen ein einem Logikwert "1" entsprechendes Eingangssignal empfangen wird, als Sensortyp PNP, Normal Geschlossen, zu bestimmen.

Diese Fördervorrichtung kann fortgebildet werden, indem die Prozessoreinheit ausgebildet ist um den Sensor durch die Prozessoreinheit zu überwachen, in einem ersten Konfigurationsschritt, in dem der Sensor frei ist, ein erstes Eingangssignal des Sensors durch die Prozessoreinheit zu empfangen, und in einem zweiten Konfigurationsschritt, in dem der Sensor mit einem in dem Fördersegment angeordneten Objekt belegt ist, ein zweites Eingangssignal des Sensors durch die Prozessoreinheit zu empfangen, und den Sensortypes mittels einer logischen Auswertung des ersten und des zweiten Eingangssignals durch die Prozessoreinheit zu bestimmen.

Diese Fördervorrichtung kann fortgebildet werden, indem die Steuerungseinheit mehrere Sensoranschlussbuchsen und mehrere Motoranschlussbuchsen aufweist und die Prozessoreinheit ausgebildet ist um nach Schritt iv) ein Zuordnungsplan der angeschlossenen Sensoren zu den angeschlossenen Förderantrieben zu ermitteln, mit den Schritten: Aufsetzen eines Objekts in ein Fördersegment und Aktivieren des Förderantriebs des Fördersegments in einer ersten Förderrichtung, Überwachen der Sensorsignale durch die Prozessoreinheit, und Zuordnen des Förderantriebs zu einem Sensor, der vor nach Aktivieren des Förderantriebs sein Signal ändert, durch die Prozessoreinheit.

Diese Fördervorrichtung kann fortgebildet werden, indem die Prozessoreinheit ausgebildet ist um einen Zusatzantrieb des Fördersegment zu erkennen und zuzuordnen, durch die Schritte: Signalisieren des den nicht zugeordneten Zusatzantriebs einem Bediener, indem ein optisches oder akustisches Signal, insbesondere eine vorbestimmte Abfolge von Start-Stopp Vorgängen des Zusatzantriebs durch die Prozessoreinheit ausgegeben wird, Überwachen der Sensorsignale durch die Prozessoreinheit, Manuelles Auslösen des Sensors durch den Bediener, und Zuordnen des manuell ausgelösten Sensors zu dem Zusatzmotor durch die Prozessoreinheit.

Diese Fördervorrichtung kann fortgebildet werden, indem die Prozessoreinheit ausgebildet ist um während des Überwachens der Sensorsignale die Sensoransteuerung fortlaufend zwischen Sensortyp PNP und Sensortyp NPN umzuschalten.

Die erfindungsgemäße Fördervorrichtung ist ausgebildet, um das zuvor beschriebene Verfahren zum Einrichten einer Steuerungseinheit auszuführen.

Bevorzugte Ausführungsformen werden anhand der beiliegenden Figuren erläutert. Es zeigen
- Fig. 1: eine schematische Ansicht einer Förderstrecke bestehend aus drei Fördersegmenten gemäß einer ersten bevorzugten Ausführungsform der Erfindung,
- Fig. 2: eine schematische Ansicht einer Förderstrecke bestehend aus einer Steuerungseinheit mit Anschlussbuchsen für vier Fördersegmente gemäß einer zweiten bevorzugten Ausführungsform der Erfindung,
- Fig. 3: ein beispielhaftes Ablaufdiagramm der Hardware-Erkennung der Steuerungseinheit
- Fig. 4: eine Übersicht der möglichen Sensor-Typen und deren Schaltlogik

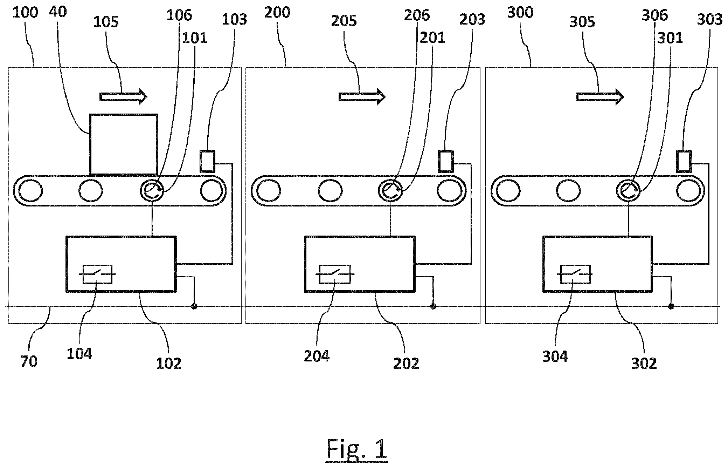

In Fig. 1 ist ein Ausschnitt aus einer Fördervorrichtung abgebildet, der aus insgesamt drei Fördersegmenten 100 - 300 besteht. Die Fördersegmente 100-200 und die Fördersegmente 200-300 sind direkt benachbart und bilden eine Förderstrecke.

Jedes Fördersegment 100 - 300 enthält einen Förderantrieb 101 - 301, der die Leerlaufrollen des Fördersegments über Riemen mit antreibt und so das Transportgut 40 befördert. Die Förderrichtung 105 - 305 wird durch die Drehrichtung 106 - 306 der Förderantriebe 101 -301 bestimmt. Die Drehrichtung ist so konfiguriert, dass das Transportgut stromabwärts befördert wird. Jeder Förderantrieb 101 -301 ist an eine entsprechende Steuerungseinheit 102 - 302 signaltechnisch angeschlossen, indem eine Signal- und Spannungsversorgungsleitung mit daran angeordneten Motoranschlussstecker in eine Motoranschlussbuchse an der entsprechenden Steuerungseinheit angeschlossen ist.

Desweiteren verfügt jedes Fördersegment über eine Steuerungseinheit 102 - 302, die jeweils einen Hall-Effekt Sensor 104 - 304 zum Aktivieren des Lernmodus beinhaltet.

Jedes Fördersegment 100-300 weist jeweils einen stromabwärts der Mitte des Fördersegments montierten Sensor 103 - 303 auf. Diese Sensoren sind so angeordnet, dass das Vorhandensein eines Transportguts im Austrittsbereich der einzelnen Fördersegmente damit erfasst werden kann. Jeder Sensor 103 - 303 ist an eine entsprechende Steuerungseinheit 102 - 302 signaltechnisch angeschlossen, indem eine Signal- und Spannungsversorgungsleitung mit daran angeordneten Sensoranschlussstecker in eine Sensoranschlussbuchse an der entsprechenden Steuerungseinheit angeschlossen ist.

Ein Datenaustausch zwischen den Steuerungseinheiten kann mittels der Buskommunikation 70 erfolgen.

In Fig. 1 ist der Ausgangszustand eines Eigenkonfigurationsvorganges schematisch dargestellt. Ein Anwender hat ein Transportgut auf das erste Fördersegment 100 gelegt und kann durch Annähern eines Magneten (in Fig. 1 nicht dargestellt) an einen an der Steuerungseinheit 102 angeordneten Hall-Effekt Sensor 104 einen Konfigurationsmodus aktivieren. Infolge dieser Aktivierung wird eine in der Steuerungseinheit angeordnete Prozessoreinheit in einen Konfigurationsmodus versetzt und führt eine Reihe von Eigenanalyse und - konfigurationsschritten durch, die nachfolgende näher erläutert werden..

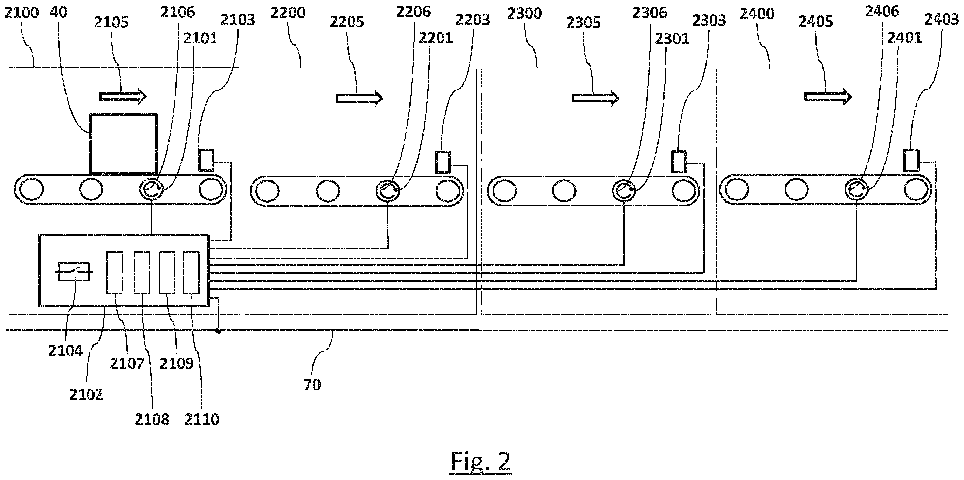

Fig. 2 stellt eine zweite Ausführungsform einer erfindungsgemäßen Fördervorrichtung dar, bei der eine Steuerungseinheit 2102 eine Mehrzahl von Fördersegmenten 2100, 2200, 2300, 2400 steuert, wobei die Steuerung durch vier in der Steuerungseinheit implementierte Programmeinheiten 2107 - 2110 erfolgt. Die Programmeinheiten 2107 - 2110 werten die Signale von vier Sensoren 2103, 2203, 2303, 2403 aus. Die Programmeinheiten 2107 - 2110 steuern vier Förderantriebe 2101, 2201, 2301, 2401 in den einzelnen Fördersegmenten, indem in Abhängigkeit der Signale der Sensoren 2103, 2203, 2303, 2403 diese Förderantriebe aktiviert oder deaktiviert werden. Die Programmeinheiten in der Steuerungseinheit kontrollieren die Drehrichtung 2106, 2206, 2306, 2406 der Förderantriebe, um ein Transportgut 40 stromabwärts zu befördern. Durch die Umkehr der Drehrichtung 2106, 2206, 2306, 2406 können die Programmeinheiten die Förderrichtungen 2105, 2205, 2305, 2405 in den Fördersegmenten 2100, 2200, 2300, 2400 kontrollieren. Die Programmeinheiten können innerhalb der Steuerungseinheit Daten austauschen, um z. B. die Erkennung der Drehrichtung der Förderantriebe durchzuführen. Darüberhinaus ist die Steuerungseinheit 2102 in die Buskommunikation 70 eingebunden und ermöglicht einen Datenaustausch z. B. mit anderen Steuerungseinheiten.

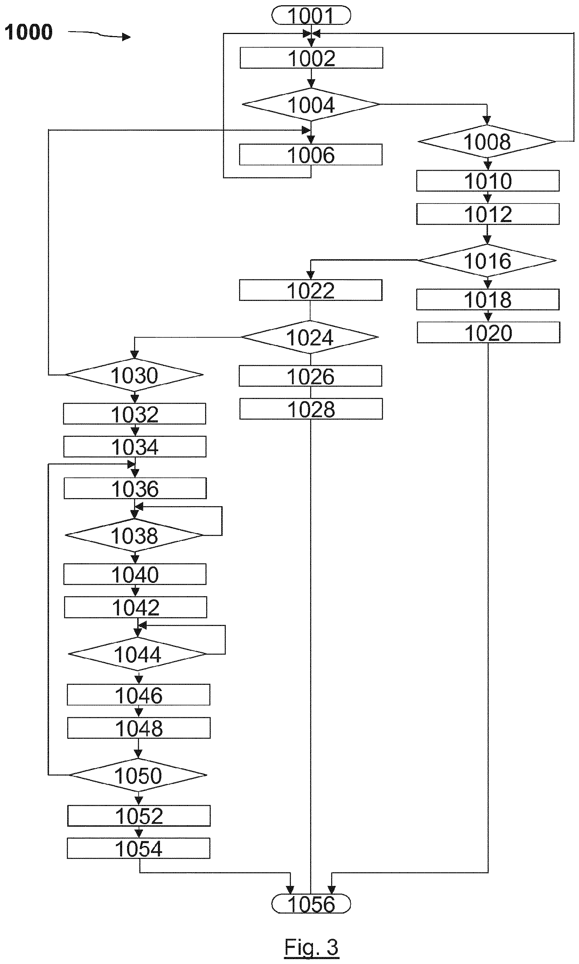

In Figur 3 ist ein beispielhaftes Ablaufdiagramm des erfindungsgemäßen Verfahrens in Form des Ablaufdiagramms 300 dargestellt.

Nach der Aktivierung des Konfigurationsmodus im Schritt 1001 wird in dem Schritt 1002 die an eine Steuerungseinheit angeschlossene Anzahl von Motoren durch die Prozessoreinheit der Steuerungseinheit ausgewertet. Dies geschieht entweder durch Auswertung der Motorstörsignale oder durch Messung der Motorbetriebsströme. In diesem Schritt wird auch ein Belegungsplan der Motoranschlussbuchsen ermittelt.

Im darauffolgenden Prüfschritt 1004 wird der zuvor ermittelte Belegungsplan der Motoranschlussbuchsen mit einem Sollbelegungsplan verglichen. Insbesondere wird geprüft, ob die Motoren in fortlaufender Reihenfolge an den Motoranschlussbuchsen angeschlossen sind. Sind der Sollbelegungsplan und der Belegungsplan der Motoranschlussbuchsen nicht identisch, so wird der Schritt 1006 ausgeführt, in dem dem Anwender das Nichtübereinstimmen des Belegungsplans der Motoranschlussbuchsen und des Sollbelegungsplans durch eine Fehlermeldung signalisiert wird. Diese Fehlermeldung wird durch eine Sequenz aus einer kurzen Vorwärtsdrehbewegung, gefolgt von einer kurzen Rückwärtsdrehbewegung und einer kurzen Vorwärtsdrehbewegung des fehlerhaft angeschlossenen Förderantriebs signalisiert. Der Anwender ist dadurch aufgefordert, die Anschlussbelegung der Motoren anzupassen, sodass sie mit einem Sollbelegungsplan übereinstimmen. Hierzu wird nach dem Schritt 1006 wiederholt der Schritt 1002 ausgeführt.

Stimmen im Schritt 1004 der Sollbelegungsplan und der Belegungsplan der Motoranschlussbuchsen überein, so wird dies durch eine Sequenz aus zwei kurzen Vorwärtsdrehbewegungen signalisiert und hiernach der Schritt 1008 ausgeführt. Im Schritt 1008 wird geprüft, ob die Belegung der Motoranschlussbuchsen für einen vorbestimmten Zeitraum, beispielsweise 30 Sekunden, unverändert bleibt. Bleibt die Belegung der Motoranschlussbuchsen nicht für 30 Sekunden unverändert, so wird der Schritt 1002 erneut ausgeführt. Bleibt hingegen im Prüfschritt 1008 die Motoranschlussbelegung für 30 Sekunden unverändert, so wird im Folgenden der Schritt 1010 ausgeführt.

Im Schritt 1010 werden nicht genutzte Motoranschlussbuchsen deaktiviert.

Im darauffolgenden Schritt 1012 werden durch die Prozessoreinheit der Steuerungseinheit die Sensoranschlussbuchsen auf den Sensortyp PNP und normal-geschlossen konfiguriert. Im darauffolgenden Prüfschritt 1016 wird verglichen, ob der Belegungsplan der Motoranschlussbuchsen identisch ist mit dem Belegungsplan der Sensoranschlussbuchsen. Sind der Belegungsplan der Motoranschlussbuchsen und der Sensoranschlussbuchsen identisch, so wird der Schritt 1018 ausgeführt. In dem Schritt 1018 konfiguriert die Prozessoreinheit der Steuerungseinheit die Sensoreingänge auf negative Schaltlogik. In dem darauffolgenden Schritt 1020 speichert die Prozessoreinheit den Sensortyp PNP und die Schaltlogik normal-geschlossen. Weiterhin wird die Anzahl der zu steuernden Fördersegmente, die durch die Anzahl der erkannten Motoren beziehungsweise die Anzahl der erkannten Sensoren bestimmt ist, abgespeichert. Sind in dem Prüfschritt 1016 die Belegung der Motoranschlussbuchsen nicht identisch mit der Belegung der Sensoranschlussbuchsen, so wird der Schritt 1022 ausgeführt. In dem Schritt 1022 werden die Sensoreingänge auf den Sensortyp NPN und normal-geschlossen umgestellt. In dem darauffolgenden Prüfschritt 1024 prüft die Prozessoreinheit der Steuerungseinheit, ob die Belegung der Motoranschlussbuchsen identisch ist mit der Belegung der Sensoranschlussbuchsen. Wenn im Prüfschritt 1024 die Belegung der Motoranschlussbuchsen identisch ist mit der Belegung der Sensoranschlussbuchsen, wird der Schritt 1026 ausgeführt. Werden die Sensoranschlüsse in negativer Schaltlogik konfiguriert. In dem darauffolgenden Schritt 1028 speichert die Prozessoreinheit den Sensortyp NPN und die Schaltlogik normal-geschlossen.

Weiterhin wird die Anzahl der zu steuernden Fördersegmente, die durch die Anzahl der erkannten Motoren beziehungsweise die Anzahl der erkannten Sensoren bestimmt ist, abgespeichert. Ist im Prüfschritt 1024 die Belegung der Motoranschlussbuchsen nicht identisch mit der Belegung der Sensoranschlussbuchsen so wird der Prüfschritt 1030 ausgeführt. Im Prüfschritt 1030 wird überprüft, ob die Anzahl der belegten Sensoranschlussbuchsen größer ist als die Anzahl der belegten Motoranschlussbuchsen. Ist die Anzahl der belegten Sensoranschlussbuchsen größer als die Anzahl der belegten Motoranschlussbuchsen, so wird der Schritt 1006 erneut ausgeführt. Ist die Anzahl der belegten Sensoranschlussbuchsen nicht größer als die Anzahl der belegten Motoranschlussbuchsen, so existieren entweder mehr Motoren in einem Fördersegment als Sensoreinheiten, oder die Sensoreinheiten sind vom Sensortyp normal-offen. Um eine Zuordnung der noch nicht zugeordneten Motoren zu Sensoren zu ermöglichen, oder die Konfiguration der Sensoreinheiten zu ermitteln, wird der Schritt 1032 ausgeführt. In dem Schritt 1032 werden die Sensoreingänge auf positive Schaltlogik umgestellt.

In dem darauffolgenden Schritt 1034 werden die Sensoreingänge weiterhin derart konfiguriert, dass sie fortwährend den Sensortyp zwischen PNP und NPN abwechseln.

In dem darauffolgenden Schritt 1036 wird einer der noch nicht zugeordneten Motoren in einem vorbestimmten Bewegungsmuster aktiviert, beispielsweise wird er für eine Sekunde aktiviert, dann für drei Sekunden deaktiviert und dann für eine Sekunde aktiviert. Hierdurch wird dem Anwender signalisiert, welcher der noch nicht zugeordneten Motoren zu diesem Zeitpunkt zugeordnet werden soll. In dem darauffolgenden Schritt 1038 wird geprüft, ob eine Signaländerung an einem der Sensoreingänge ausgelöst wird. Wird in dem Prüfschritt 1038 keine Signaländerung an einem der Sensoreingänge ausgelöst, so wird der Prüfschritt 1038 wiederholt ausgeführt. Wird in dem Prüfschritt 1038 eine Signaländerung in einem der Sensoreingänge ausgelöst, so wird der Schritt 1040 ausgeführt. Im Schritt 1040 erfolgt die Zuordnung des ausgelösten Sensors zu dem aktivierten Motor. Gefolgt wird dieser Schritt von dem Schritt 1042 in dem der zugeordnete Motor zur Quittierung der Zuordnung in einen Dauerlauf versetzt wird.

In dem darauffolgenden Prüfschritt 1044 wird geprüft, ob eine erneute Signaländerung an dem betreffenden Sensoreingang ausgelöst wird. Wird keine erneute Signaländerung an dem betreffenden Sensoreingang ausgelöst, so wird der Prüfschritt 1044 erneut ausgeführt. Wird im Prüfschritt 1044 eine erneute Signaländerung an dem betreffenden Sensoreingang ausgeführt, so wird der Schritt 1046 ausgeführt. Im Schritt 1046 wird der zuvor aktivierte Motor deaktiviert. In dem darauffolgenden Schritt 1048 wird die Anzahl der noch nicht zugeordneten Motoren ermittelt.

Im Prüfschritt 1050 wird geprüft, ob die Anzahl der noch nicht zugeordneten Motoren größer null ist. Ist die Anzahl der noch nicht zugeordneten Motoren größer null so wird der Schritt 1036 erneut ausgeführt. Ist die Anzahl der noch nicht zugeordneten Motoren nicht größer null, so wird der Schritt 1052 ausgeführt. Im Schritt 1052 werden die Sensoreingänge auf positive Schaltlogik umgeschaltet. In dem darauffolgenden Schritt 1054 die Zuordnung der Motoren zu den Sensoren und die Sensortype als die ermittelte Sensortype (PNP oder NPN) sowie die Schalteigenschaft normal-offen abgespeichert. In dem darauffolgenden Schritt 1056 wird das Verfahren beendet.

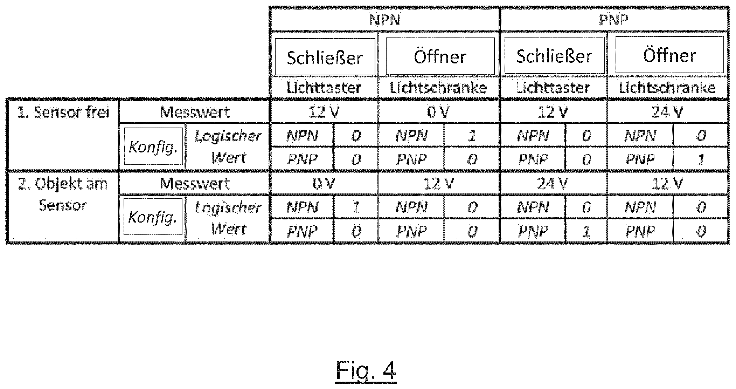

Figur 4 gibt eine Übersicht der möglichen auftretenden Schaltzustände eines Sensors wider. Die Ausgangsstufe eines Sensors kann beispielsweise mit Bipolartransitoren aufgebaut werden, die in den Typen NPN oder PNP existieren. Zudem unterscheiden sich Sensoren in dem Schaltverhalten und zwar werden Schließer, die Normal Geöffnet sind und Öffner, die Normal Geschlossen sind, unterschieden. Das Schaltverhalten ist von der Konfiguration eines Sensors abhängig. Bei den Sensoren können zum Beispiel Lichttaster und Lichtschranken unterschieden werden. Gemäß der verschiedenen Ausführungen und Konfigurationen der Sensoren ergeben sich die in der Übersicht dargestellten Schalt- und Logikzustände an dem Ausgang eines Sensors.

## Patentansprüche

1. Verfahren zum Einrichten einer Steuerungseinheit in einer Fördervorrichtung, wobei eine Steuerungseinheit (102, 202, 302, 2102) ein oder mehrere Fördersegmente (100, 200, 300, 2100, 2200, 2300, 2400) steuert und jedes Fördersegment
a. einen Förderantrieb (106, 206, 306, 2106, 2206, 2306, 2406) zum Fördern eines Objekts (40) durch das Fördersegment, der signaltechnisch über eine Motoranschlussbuchse mit der Steuerungseinheit gekoppelt ist, und
b. einen Sensor (104, 204, 304, 2103, 2203, 2303, 2403) zum Erfassen eines Objekts an einer Position innerhalb des Fördersegments, der signaltechnisch über eine Sensoranschlussbuchse mit der Steuerungseinheit gekoppelt ist, umfasst,
**dadurch gekennzeichnet, dass** die Steuerungseinheit eine Eigenkonfiguration durchführt, mit den Schritten:
i) Aktivieren eines Konfigurationsmodus an der Steuerungseinheit,
ii) Empfangen eines Signals von jeder Motoranschlussbuchse oder Sensoranschlussbuchse der Steuerungseinheit in einer Prozessoreinheit der Steuerungseinheit,
iii) Vergleichen des/der empfangenen Signals/Signale mit einem in der Steuerungseinheit gespeicherten Vergleichswertes, und
iv) Bestimmen anhand des Vergleichs des/der Signale mit dem Vergleichswert, ob ein Förderantrieb bzw. ein Sensor an eine Motoranschlussbuchse bzw. Sensoranschlussbuchse der Steuerungseinheit angeschlossen ist, und dass die Steuerungseinheit mehrere Sensoranschlussbuchsen aufweist und nach Schritt iv) ein Belegungsplan der Sensoranschlussbuchsen ermittelt wird und mit einem Soll-Belegungsplan verglichen wird, der für jede mögliche Anzahl von angeschlossenen Sensoren ein Sollbelegungsmuster umfasst, und dass bei Abweichen von dem Sollbelegungsmuster eine Fehlermeldung durch die Prozessoreinheit ausgegeben wird, insbesondere eine optische oder eine akustische Fehlermeldung

2. Verfahren nach Anspruch 1, **dadurch gekennzeichnet, dass**:
- In Schritt ii) als Signal ein Störsignal von jeder Motoranschlussbuchse durch die Prozessoreinheit abgefragt wird, in Schritt iii) verglichen wird, ob ein Störsignal empfangen wurde oder ob kein Störsignal empfangen wurde und in Schritt iv) fürjede Motoranschlussbuchse bei fehlendem Empfang eines Störsignals ein angeschlossener Förderantrieb an der Motoranschlussbuchse bestimmt wird und bei Empfang eines Störsignals ein nicht angeschlossener Förderantrieb an der Motoranschlussbuchse bestimmt wird, oder In Schritt i) alle an die Steuerungseinheit (102, 202, 302, 2102) angeschlossenen Förderantriebe (106, 206, 306, 2106, 2206, 2306, 2406) aktiviert werden, in Schritt ii) als Signal ein Aktivitätssignal, insbesondere ein Motorbetriebsstrom oder ein Signal eines mit dem Förderantrieb mechanisch gekoppelten Drehsensors an jeder Motoranschlussbuchse in der Prozessoreinheit empfangen wird, in Schritt iii) das empfangene Aktivitätssignal mit einem Sollwert als Vergleichswert verglichen wird, und in Schritt iv) bei Vorhandensein eines Aktivitätssignals bestimmt wird, dass ein Förderantrieb an der Motoranschlussbuchse angeschlossen ist und bei Nicht-Vorhandensein eines Aktivitätssignals bestimmt wird, dass kein Förderantrieb an der Motoranschlussbuchse angeschlossen ist

3. Verfahren nach Anspruch 1 oder 2, **dadurch gekennzeichnet, dass** die Steuerungseinheit (102, 202, 302, 2102) mehrere Motoranschlussbuchsen aufweist und nach Schritt iv) ein Belegungsplan der Motoranschlussbuchsen ermittelt wird und mit einem Soll-Belegungsplan verglichen wird, der für jede mögliche Anzahl von angeschlossenen Förderantrieben (106, 206, 306, 2106, 2206, 2306, 2406) ein Sollbelegungsmuster umfasst, und dass bei Abweichen von dem Sollbelegungsmuster eine Fehlermeldung durch die Prozessoreinheit ausgegeben wird, insbesondere ein optisches oder ein akustisches Signal.

4. Verfahren nach einem der vorhergehenden Ansprüche, **dadurch gekennzeichnet, dass**
- In Schritt ii) als Signal ein Störsignal von jeder Sensoranschlussbuchse durch die Prozessoreinheit abgefragt wird, in Schritt iii) verglichen wird, ob ein Störsignal empfangen wurde oder ob kein Störsignal empfangen wurde und in Schritt iv) für jede Sensoranschlussbuchse bei fehlendem Empfang eines Störsignals ein angeschlossener Sensor an der Sensoranschlussbuchse bestimmt wird und bei Empfang eines Störsignals ein nicht angeschlossener Sensor an der Sensoranschlussbuchse bestimmt wird, oder
- in Schritt i) alle an die Steuerungseinheit (102, 202, 302, 2102) angeschlossenen Sensoren aktiviert werden, in Schritt ii) als Signal ein Sensorsignal an jeder Sensoranschlussbuchse in der Prozessoreinheit empfangen wird, in Schritt iii) das empfangene Sensorsignal mit einem Sollwert als Vergleichswert verglichen wird, und in Schritt iv) bei Vorhandensein eines Sensorsignals ein angeschlossener Sensor an der Sensoranschlussbuchse bestimmt wird und bei Nicht-Vorhandensein eines Sensorsignals ein nicht angeschlossener Sensor an der Sensoranschlussbuchse bestimmt wird.

5. Verfahren nach einem der vorhergehenden Ansprüche, **dadurch gekennzeichnet, dass** die Prozessoreinheit die Anzahl der erkannten Sensoren mit der Anzahl der erkannten Förderantriebe vergleicht und eine Fehlermeldung erzeugt, wenn die Anzahl der erkannten Sensoren größer ist als die Anzahl der erkannten Förderantriebe.

6. Verfahren nach einem der vorhergehenden Ansprüche, **dadurch gekennzeichnet, dass** die Steuerungseinheit (102, 202, 302, 2102) zum Anschluss und zur Verarbeitung von Sensorsignalen unterschiedlicher Sensortypen ausgebildet ist und der Sensortyp ermittelt wird, indem
- Jede Sensoranschlussbuchse durch die Prozessoreinheit mit einem vorbestimmten Ausgangssignal beaufschlagt wird,
- Von jeder Sensoranschlussbuchse durch die Prozessoreinheit ein Eingangssignal empfangen wird,
- das empfangene Eingangssignal mit einem vorbestimmten Sollwert verglichen wird, und
- anhand des Vergleichs des empfangenen Sensorsignals mit dem vorbestimmten Sollwert der Sensortyp bestimmt wird.

7. Verfahren nach Anspruch 6, **dadurch gekennzeichnet, dass** die Sensortypen sich dadurch unterscheiden, dass ein Sensortyp NPN-konfiguriert ist und ein anderer Sensortyp PNP-konfiguriert und/ oder dass die Sensortypen sich dadurch unterscheiden, dass ein Sensortyp Normal-Offen-konfiguriert ist und ein anderer Sensortyp Normal-Geschlossen-konfiguriert ist.

8. Verfahren nach Anspruch 6 oder 7, **dadurch gekennzeichnet, dass** das vorbestimmte Ausgangssignal durch eine Programmierung der Sensoranschlussbuchse auf positive Schaltlogik und PNP beaufschlagt wird, und dass das Eingangssignal durch die Prozessoreinheit in einen Logikwert interpretiert wird und anhand dieses Logikwertes mit einem vorbestimmten Sollwert verglichen wird und dass alle Sensoranschlussbuchsen, von denen ein einem Logikwert "1" entsprechendes Eingangssignal empfangen wird, als Sensortyp PNP, Normal Geschlossen, bestimmt wird.

9. Verfahren nach einem der Ansprüche 6-8, **dadurch gekennzeichnet, dass**
- der Sensor durch die Prozessoreinheit überwacht wird,
- in einem ersten Konfigurationsschritt der Sensor frei ist und ein erstes Eingangssignal des Sensors durch die Prozessoreinheit empfangen wird, und
- in einem zweiten Konfigurationsschritt der Sensor mit einem in dem Fördersegment (100, 200, 300, 2100, 2200, 2300, 2400) angeordneten Objekt belegt wird und ein zweites Eingangssignal des Sensors durch die Prozessoreinheit empfangen wird, und
- die Bestimmung des Sensortypes mittels einer logischen Auswertung des ersten und des zweiten Eingangssignals durch die Prozessoreinheit erfolgt.

10. Verfahren nach einem der vorhergehenden Ansprüche, **dadurch gekennzeichnet, dass** die Steuerungseinheit (102, 202, 302, 2102) Z mehrere Sensoranschlussbuchsen und mehrere Motoranschlussbuchsen aufweist und nach Schritt iv) ein Zuordnungsplan der angeschlossenen Sensoren (104, 204, 304, 2103, 2203, 2303, 2403) zu den angeschlossenen Förderantrieben (106, 206, 306, 2106, 2206, 2306, 2406) ermittelt wird, mit den Schritten:
- Aufsetzen eines Objekts in ein Fördersegment (100, 200, 300, 2100, 2200, 2300, 2400) und Aktivieren des Förderantriebs des Fördersegments in einer ersten Förderrichtung,
- Überwachen der Sensorsignale durch die Prozessoreinheit, und
- Zuordnen des Förderantriebs zu einem Sensor, der nach Aktivieren des Förderantriebs sein Signal ändert, durch die Prozessoreinheit.

11. Verfahren nach einem der vorhergehenden Ansprüche, **dadurch gekennzeichnet, dass** ein Zusatzantrieb des Fördersegments erkannt und zugeordnet wird, durch die Schritte
- Signalisieren des nicht zugeordneten Zusatzantriebs einem Bediener, indem ein optisches oder akustisches Signal, eine vorbestimmte Abfolge von Start-Stopp Vorgängen des Zusatzantriebs durch die Prozessoreinheit ausgegeben wird,
- Überwachen der Sensorsignale durch die Prozessoreinheit,
- Manuelles Auslösen des Sensors (104, 204, 304, 2103, 2203, 2303, 2403) durch den Bediener, und
- Zuordnen des manuell ausgelösten Sensors zu dem Zusatzantrieb durch die Prozessoreinheit.

12. Verfahren nach einem der vorhergehenden Ansprüche 9-11 **dadurch gekennzeichnet, dass** während des Überwachens der Sensorsignale die Sensoransteuerung fortlaufend zwischen Sensortyp PNP und Sensortyp NPN umgeschaltet wird.

13. Verfahren zum Einrichten einer Steuerungseinheit (102, 202, 302, 2102) in einer Fördervorrichtung, wobei
eine Steuerungseinheit ein oder mehrere Fördersegmente (100, 200, 300, 2100, 2200, 2300, 2400) Z steuert und jedes Fördersegment
a. einen Förderantrieb zum Fördern eines Objekts durch das Fördersegment, der signaltechnisch über eine Motoranschlussbuchse mit der Steuerungseinheit gekoppelt ist, und gegebenenfalls
b. einen Sensor (104, 204, 304, 2103, 2203, 2303, 2403) zum Erfassen eines Objekts an einer Position innerhalb des Fördersegments, der signaltechnisch über eine Sensoranschlussbuchse mit der Steuerungseinheit gekoppelt ist,
umfasst,
**dadurch gekennzeichnet, dass** die Steuerungseinheit eine Eigenkonfiguration durchführt und bei dieser Eigenkonfiguration einem Benutzer ein optisches Signal ausgegeben wird, um einen fehlerhaften oder korrekten Installationszustand zu signalisieren,
wobei die Steuerungseinheit mehrere Sensoranschlussbuchsen aufweist und ein Belegungsplan der Sensoranschlussbuchsen ermittelt wird und mit einem Soll-Belegungsplan verglichen wird, der für jede mögliche Anzahl von angeschlossenen Sensoren ein Sollbelegungsmuster umfasst, und dass bei Abweichen von dem Sollbelegungsmuster eine Fehlermeldung durch die Prozessoreinheit ausgegeben wird, wobei die Fehlermeldung als das optische Signal durch eine vorbestimmte Folge von Bewegungen des Förderantriebs gebildet wird.

14. Verfahren nach Anspruch 13, **dadurch gekennzeichnet, dass** die Eigenkonfiguration nach einem Verfahren nach einem der voranstehenden Ansprüche 1-13 durchgeführt wird und das optische Signal vorzugsweise die Fehlermeldung nach Anspruch 4, 6 oder 7 oder das optische Signal nach Anspruch 13 ausbildet.

15. Verwendung einer Steuerungseinheit (102, 202, 302, 2102) in einer wobei die Steuerungseinheit oder mehrere Fördersegmente (100, 200, 300, 2100, 2200, 2300, 2400) steuert und jedes Fördersegment
a. einen Förderantrieb (106, 206, 306, 2106, 2206, 2306, 2406) zum Fördern eines Objekts durch das Fördersegment, der signaltechnisch über eine Motoranschlussbuchse mit der Steuerungseinheit gekoppelt ist, und
b. einen Sensor (104, 204, 304, 2103, 2203, 2303, 2403) zum Erfassen eines Objekts an einer Position innerhalb des Fördersegments, der signaltechnisch über eine Sensoranschlussbuchse mit der Steuerungseinheit gekoppelt ist,
umfasst,
**dadurch gekennzeichnet, dass** die Steuerungseinheit eine elektronische Prozessoreinheit umfasst, die eine Eigenkonfiguration durchführt, mit den Schritten:
i) Aktivieren eines Konfigurationsmodus an der Steuerungseinheit,
ii) Empfangen eines Signals von jeder Motoranschlussbuchse oder Sensoranschlussbuchse der Steuerungseinheit in einer Prozessoreinheit der Steuerungseinheit,
iii) Vergleichen des/der empfangenen Signals/Signale mit einem in der Steuerungseinheit gespeicherten Vergleichswertes, und
iv) Bestimmen anhand des Vergleichs des/der Signale mit dem Vergleichswert, ob ein Förderantrieb bzw. ein Sensor an eine Motoranschlussbuchse bzw. Sensoranschlussbuchse der Steuerungseinheit angeschlossen ist,
v) dass die Steuerungseinheit mehrere Sensoranschlussbuchsen aufweist und um nach Schritt iv) einen Belegungsplan der Sensoranschlussbuchsen ermittelt mit einem Soll-Belegungsplan vergleicht, der für jede mögliche Anzahl von angeschlossenen Sensoren ein Sollbelegungsmuster umfasst, und bei Abweichen von dem Sollbelegungsmuster eine Fehlermeldung durch die Prozessoreinheit ausgibt, insbesondere eine optische oder eine akustische Fehlermeldung.

16. Verwendung einer Steuerungseinheit (102, 202, 302, 2102) nach Anspruch 15, **dadurch gekennzeichnet, dass** die Fehlermeldung durch ein optisches Signal durch eine vorbestimmte Folge von Bewegungen des Förderantriebs (106, 206, 306, 2106, 2206, 2306, 2406) gebildet wird.

17. Fördervorrichtung umfassend ein oder mehrere Fördersegmente (100, 200, 300, 2100, 2200, 2300, 2400) und eine Steuerungseinheit, wobei jedes Fördersegment
a. einen Förderantrieb (106, 206, 306, 2106, 2206, 2306, 2406) zum Fördern eines Objekts (40) durch das Fördersegment, der signaltechnisch über eine Motoranschlussbuchse mit der Steuerungseinheit (102, 202, 302, 2102) gekoppelt ist, und
b. einen Sensor (104, 204, 304, 2103, 2203, 2303, 2403) zum Erfassen eines Objekts an einer Position innerhalb des Fördersegments, der signaltechnisch über eine Sensoranschlussbuchse mit der Steuerungseinheit gekoppelt ist,
umfasst,
**dadurch gekennzeichnet, dass** die Steuerungseinheit (102, 202, 302, 2102) so ausgebildet ist, um ein Verfahren nach einem der Ansprüche 1-14 auszuführen.

## Claims

1. Method for setting up a control unit in a conveying apparatus, wherein
a control unit (102, 202, 302, 2102) controls one or more conveying segments (100, 200, 300, 2100, 2200, 2300, 2400), and each conveying segment comprises
a. a conveying drive (106, 206, 306, 2106, 2206, 2306, 2406) for conveying an object (40) through the conveying segment, said conveying drive being coupled to the control unit by way of a motor connection socket for signalling purposes, and
b. a sensor (104, 204, 304, 2103, 2203, 2303, 2403) for sensing an object at a position within the conveying segment, said sensor being coupled to the control unit by way of a sensor connection socket for signalling purposes,
**characterized in that** the control unit performs a self-configuration, having the steps of:
i) activating a configuration mode on the control unit,
ii) receiving a signal from each motor connection socket or sensor connection socket of the control unit in a processor unit of the control unit,
iii) comparing the received signal/signals with a comparison value stored in the control unit, and
iv) determining from the comparison of the signal/s with the comparison value whether a conveying drive or a sensor is connected to a motor connection socket or sensor connection socket of the control unit, and **in that** the control unit has multiple sensor connection sockets and, after step
iv), an assignment map of the sensor connection sockets is ascertained and is compared with a desired assignment map, which comprises a desired assignment pattern for every possible number of connected sensors, and
**in that** deviation from the desired assignment pattern results in an error message being output by the processor unit, in particular a visual or audible error message.

2. Method according to Claim 1,
**characterized in that**:
- in step ii) the signal requested from each motor connection socket by the processor unit is a noise signal, in step iii) the comparison performed is whether a noise signal was received or whether a noise signal was not received, and in step iv), for every motor connection socket, it is determined that a conveying drive is connected to the motor connection socket if a noise signal has not been received and it is determined that a conveying drive is not connected to the motor connection socket if a noise signal has been received, or
in step i) all of the conveying drives (106, 206, 306, 2106, 2206, 2306, 2406) connected to the control unit (102, 202, 302, 2102) are activated, in step ii) the signal received in the processor unit is an activity signal, in particular a motor operating current or a signal from a rotation sensor, which is mechanically coupled to the conveying drive, at each motor connection socket, in step iii) the received activity signal is compared with a desired value as the comparison value, and in step iv) the presence of an activity signal results in it being determined that a conveying drive is connected to the motor connection socket and the absence of an activity signal results in it being determined that a conveying drive is not connected to the motor connection socket.

3. Method according to Claim 1 or 2,
**characterized in**
**that** the control unit (102, 202, 302, 2102) has multiple motor connection sockets and, after step iv), an assignment map of the motor connection sockets is ascertained and is compared with a desired assignment map, which comprises a desired assignment pattern for every possible number of connected conveying drives (106, 206, 306, 2106, 2206, 2306, 2406), and in that deviation from the desired assignment pattern results in an error message being output by the processor unit, in particular a visual or audible signal.

4. Method according to one of the preceding claims,
**characterized in that**
- in step ii) the signal requested from each sensor connection socket by the processor unit is a noise signal, in step iii) the comparison performed is whether a noise signal was received or whether a noise signal was not received, and in step iv), for every sensor connection socket, it is determined that a sensor is connected to the sensor connection socket if a noise signal has not been received and it is determined that a sensor is not connected to the sensor connection socket if a noise signal has been received, or in step i) all of the sensors connected to the control unit (102, 202, 302, 2102) are activated, in step ii) the signal received in the processor unit is a sensor signal at each sensor connection socket, in step iii) the received sensor signal is compared with a desired value as the comparison value, and in step iv) the presence of a sensor signal results in it being determined that a sensor is connected to the sensor connection socket and the absence of a sensor signal results in it being determined that a sensor is not connected to the sensor connection socket.

5. Method according to one of the preceding claims,
**characterized in**
**that** the processor unit compares the number of detected sensors with the number of detected conveying drives and generates an error message if the number of detected sensors is greater than the number of detected conveying drives.

6. Method according to one of the preceding claims,
**characterized in**
**that** the control unit (102, 202, 302, 2102) is designed to connect and process sensor signals from different sensor types, and the sensor type is ascertained by virtue of
- each sensor connection socket having a predetermined output signal applied to it by the processor unit,
- an input signal being received from each sensor connection socket by the processor unit,
- the received input signal being compared with a predetermined desired value, and
- the comparison of the received sensor signal with the predetermined desired value being taken as a basis for determining the sensor type.

7. Method according to Claim 6,
**characterized in**
**that** the sensor types differ in that one sensor type is NPN configured and another sensor type is PNP configured and/or in that the sensor types differ in that one sensor type is of normally-off configuration and another sensor type is of normally-on configuration.

8. Method according to Claim 6 or 7,
**characterized in**
**that** the predetermined output signal is applied by programming the sensor connection socket for positive switching logic and PNP, and in that the input signal is interpreted as a logic value by the processor unit and is compared with a predetermined desired value on the basis of this logic value, and in that all of the sensor connection sockets from which an input signal corresponding to a logic value "1" is received are determined as sensor type PNP, normally-on.

9. Method according to one of Claims 6-8,
**characterized in that**
- the sensor is monitored by the processor unit,
- in a first configuration step the sensor is unoccupied and a first input signal from the sensor is received by the processor unit, and
- in a second configuration step the sensor is occupied by an object arranged in the conveying segment (100, 200, 300, 2100, 2200, 2300, 2400) and a second input signal from the sensor is received by the processor unit, and
- the sensor type is determined by means of a logic evaluation of the first and second input signals by the processor unit.

10. Method according to one of the preceding claims,
**characterized in**
**that** the control unit (102, 202, 302, 2102) has multiple sensor connection sockets and multiple motor connection sockets and, after step iv), an association map of the connected sensors (104, 204, 304, 2103, 2203, 2303, 2403) and the connected conveying drives (106, 206, 306, 2106, 2206, 2306, 2406) is ascertained, having the steps of:
- putting an object into a conveying segment (100, 200, 300, 2100, 2200, 2300, 2400) and activating the conveying drive of the conveying segment in a first conveying direction,
- the processor unit monitoring the sensor signals, and
- the processor unit associating the conveying drive with a sensor that changes its signal following activation of the conveying drive.

11. Method according to one of the preceding claims, **characterized in that** a supplementary drive of the conveying segment is detected and associated by means of the steps of
- signalling the unassociated supplementary drive to an operator by virtue of the processor unit outputting a visual or audible signal, a predetermined succession of start/stop processes of the supplementary drive,
- the processor unit monitoring the sensor signals,
- the operator manually triggering the sensor (104, 204, 304, 2103, 2203, 2303, 2403), and
- the processor unit associating the manually triggered sensor with the supplementary drive.

12. Method according to one of the preceding Claims 9-11, **characterized in that** during the monitoring of the sensor signals the sensor actuation is continually changed over between sensor type PNP and sensor type NPN.

13. Method for setting up a control unit (102, 202, 302, 2102) in a conveying apparatus, wherein
a control unit controls one or more conveying segments (100, 200, 300, 2100, 2200, 2300, 2400), and each conveying segment comprises
a. a conveying drive for conveying an object through the conveying segment, said conveying drive being coupled to the control unit by way of a motor connection socket for signalling purposes, and if necessary
b. a sensor (104, 204, 304, 2103, 2203, 2303, 2403) for sensing an object at a position within the conveying segment, said sensor being coupled to the control unit by way of a sensor connection socket for signalling purposes,
**characterized in**
**that** the control unit performs a self-configuration and this self-configuration results in a visual signal being output to a user in order to signal an incorrect or correct installation state,
wherein the control unit has multiple sensor connection sockets and an assignment map of the sensor connection sockets is ascertained and is compared with a desired assignment map, which comprises a desired assignment pattern for every possible number of connected sensors, and wherein deviation from the desired assignment pattern results in an error message being output by the processor unit, the error message being formed as the visual signal by means of a predetermined sequence of movements of the conveying drive.

14. Method according to Claim 13,
**characterized in**
**that** the self-configuration is performed using a method according to one of the preceding Claims 1-13 and the visual signal preferably forms the error message according to Claim 4, 6 or 7 or the visual signal according to Claim 13.

15. Use of a control unit (102, 202, 302, 2102) in a conveying apparatus,
wherein the control unit controls one or more conveying segments (100, 200, 300, 2100, 2200, 2300, 2400), and each conveying segment comprises
a. a conveying drive (106, 206, 306, 2106, 2206, 2306, 2406) for conveying an object through the conveying segment, said conveying drive being coupled to the control unit by way of a motor connection socket for signalling purposes, and
b. a sensor (104, 204, 304, 2103, 2203, 2303, 2403) for sensing an object at a position within the conveying segment, said sensor being coupled to the control unit by way of a sensor connection socket for signalling purposes, **characterized in that** the control unit comprises an electronic processor unit that performs a self-configuration, having the steps of:
i) activating a configuration mode on the control unit,
ii) receiving a signal from each motor connection socket or sensor connection socket of the control unit in a processor unit of the control unit,
iii) comparing the received signal/signals with a comparison value stored in the control unit, and
iv) determining from the comparison of the signal/s with the comparison value whether a conveying drive or a sensor is connected to a motor connection socket or sensor connection socket of the control unit,
v) **in that** the control unit has multiple sensor connection sockets and, after step iv), ascertains an assignment map of the sensor connection sockets and compares it with a desired assignment map, which comprises a desired assignment pattern for every possible number of connected sensors, and, in the event of deviation from the desired assignment pattern, outputs an error message by means of the processor unit, in particular a visual or audible error message.

16. Use of a control unit (102, 202, 302, 2102) according to Claim 15, **characterized in that** the error message is formed by a visual signal by means of a predetermined sequence of movements of the conveying drive (106, 206, 306, 2106, 2206, 2306, 2406).

17. Conveying apparatus comprising one or more conveying segments (100, 200, 300, 2100, 2200, 2300, 2400) and a control unit, wherein each conveying segment comprises
a. a conveying drive (106, 206, 306, 2106, 2206, 2306, 2406) for conveying an object (40) through the conveying segment, said conveying drive being coupled to the control unit (102, 202, 302, 2102) by way of a motor connection socket for signalling purposes, and
b. a sensor (104, 204, 304, 2103, 2203, 2303, 2403) for sensing an object at a position within the conveying segment, said sensor being coupled to the control unit by way of a sensor connection socket for signalling purposes,
**characterized in**
**that** the control unit (102, 202, 302, 2102) is designed to carry out a method according to one of Claims 1-14.

## Revendications

1. Procédé permettant d'aménager une unité de commande dans un dispositif de convoyage, dans lequel une unité de commande (102, 202, 302, 2102) commande un ou plusieurs segments de convoyage (100, 200, 300, 2100, 2200, 2300, 2400), et chaque segment de convoyage comprend
a. un mécanisme entraînement de convoyage (106, 206, 306, 2106, 2206, 2306, 2406) pour convoyer un objet (40) par le segment de convoyage et qui est couplé pour la transmission de signaux à l'unité de commande par l'intermédiaire d'une prise de connexion de moteur, et
b. un capteur (104, 204, 304, 2103, 2203, 2303, 2403) pour détecter un objet dans une position à l'intérieur du segment de convoyage et qui est couplé pour la transmission de signaux à l'unité de commande par l'intermédiaire d'une prise de connexion de capteur,
**caractérisé en ce que** l'unité de commande effectue une auto-configuration, comprenant les étapes consistant à :
i) activer un mode configuration au niveau de l'unité de commande,
ii) recevoir un signal de chaque prise de connexion de moteur ou prise de connexion de capteur de l'unité de commande dans une unité centrale de l'unité de commande,
iii) comparer le signal reçu ou les signaux reçus avec une valeur de comparaison stockée dans l'unité de commande, et
iv) déterminer à l'aide de la comparaison du signal/des signaux avec la valeur de comparaison si un mécanisme d'entraînement de convoyage ou un capteur est connecté à une prise de connexion de moteur ou à une prise de connexion de capteur de l'unité de commande, et
**en ce que** l'unité de commande présente plusieurs prises de connexion de capteur, et après l'étape iv), un schéma d'affectation des prises de connexion de capteur est établi et comparé avec un schéma d'affectation théorique qui comprend pour chaque nombre possible de capteurs connectés un modèle d'affectation théorique, et **en ce qu'**en cas d'écart par rapport au modèle d'affectation théorique, un message d'erreur est délivré par l'unité centrale, en particulier un message d'erreur optique ou acoustique.

2. Procédé selon la revendication 1,
**caractérisé en ce que** :
- à l'étape ii), un signal parasite de chaque prise de connexion de moteur est interrogé comme signal par l'unité centrale, à l'étape iii), on compare si un signal parasite a été reçu ou si aucun signal parasite n'a été reçu, et à l'étape iv), pour chaque prise de connexion de moteur, en l'absence de réception d'un signal parasite, un mécanisme d'entraînement de convoyage connecté à la prise de connexion de moteur est déterminé, et en cas de réception d'un signal parasite, un mécanisme d'entraînement de convoyage non connecté à la prise de connexion de moteur est déterminé, ou
à l'étape i), tous les mécanismes d'entraînement de convoyage (106, 206, 306, 2106, 2206, 2306, 2406) connectés à l'unité de commande (102, 202, 302, 2102) sont activés, à l'étape ii), un signal d'activité, en particulier un courant de régime de moteur ou un signal d'un capteur rotatif couplé mécaniquement au mécanisme d'entraînement de convoyage est reçu comme signal à chaque prise de connexion de moteur dans l'unité centrale, à l'étape iii), le signal d'activité reçu est comparé avec une valeur théorique comme valeur de comparaison, et à l'étape iv), en présence d'un signal d'activité, il est déterminé qu'un mécanisme d'entraînement de convoyage est connecté à la prise de connexion de moteur, et en l'absence d'un signal d'activité, il est déterminé qu'aucun mécanisme d'entraînement de convoyage n'est connecté à la prise de connexion de moteur.

3. Procédé selon la revendication 1 ou 2,
**caractérisé en**
**ce que** l'unité de commande (102, 202, 302, 2102) présente plusieurs prises de connexion de moteur, et après l'étape iv), un schéma d'affectation des prises de connexion de moteur est établi et est comparé avec un schéma d'affectation théorique qui comprend pour chaque nombre possible de mécanismes d'entraînement de convoyage (106, 206, 306, 2106, 2206, 2306, 2406) connectés un modèle d'affectation théorique, et **en ce qu'**en cas d'écart par rapport au modèle d'affectation théorique, un message d'erreur est délivré par l'unité centrale, en particulier un signal optique ou acoustique.

4. Procédé selon l'une quelconque des revendications précédentes, **caractérisé en ce que**
- à l'étape ii), un signal parasite de chaque prise de connexion de capteur est interrogé comme signal par l'unité centrale, à l'étape iii), on compare si un signal parasite a été reçu ou si aucun signal parasite n'a été reçu, et à l'étape iv), pour chaque prise de connexion de capteur, en l'absence de réception d'un signal parasite, un capteur connecté à la prise de connexion de capteur est déterminé, et en cas de réception d'un signal parasite, un capteur non connecté à la prise de connexion de capteur est déterminé, ou
- à l'étape i), tous les capteurs connectés à l'unité de commande (102, 202, 302, 2102) sont activés, à l'étape ii), un signal de capteur à chaque prise de connexion de capteur est reçu comme signal dans l'unité centrale, à l'étape iii), le signal de capteur reçu est comparé avec une valeur théorique comme valeur de comparaison, et à l'étape iv), en présence d'un signal de capteur, un capteur connecté à la prise de connexion de capteur est déterminé, et en l'absence d'un signal de capteur, un capteur non connecté à la prise de connexion de capteur est déterminé.

5. Procédé selon l'une quelconque des revendications précédentes, **caractérisé en ce que** l'unité centrale compare le nombre des capteurs reconnus avec le nombre des mécanismes d'entraînement de convoyage reconnus et génère un message d'erreur si le nombre des capteurs reconnus est supérieur au nombre des mécanismes d'entraînement de convoyage reconnus.

6. Procédé selon l'une quelconque des revendications précédentes, **caractérisé en ce que** l'unité de commande (102, 202, 302, 2102) est réalisée pour connecter et pour traiter des signaux de capteur de différents types de capteur, et le type de capteur est établi **en ce que**
- chaque prise de connexion de capteur est sollicitée par l'unité centrale avec un signal de sortie prédéterminé,
- l'unité centrale reçoit un signal d'entrée de chaque prise de connexion de capteur,
- le signal d'entrée reçu est comparé avec une valeur théorique prédéterminée, et
- le type de capteur est déterminé à l'aide de la comparaison du signal de capteur reçu avec la valeur théorique prédéterminée.

7. Procédé selon la revendication 6,
**caractérisé en**
**ce que** les types de capteur se distinguent **en ce qu'**un type de capteur est configuré NPN et un autre type de capteur est configuré PNP, et/ou **en ce que** les types de capteur se distinguent **en ce qu'**un type de capteur est configuré normalement ouvert et un autre type ce capteur est configuré normalement fermé.

8. Procédé selon la revendication 6 ou 7,
**caractérisé en**
**ce que** le signal de sortie prédéterminé est sollicité par programmation de la prise de connexion de capteur en logique de commutation positive et PNP, et **en ce que** le signal d'entrée est interprété par l'unité centrale en valeur logique, et est comparé avec une valeur théorique prédéterminée à l'aide de cette valeur logique, et **en ce que** toutes les prises de connexion de capteur recevant un signal d'entrée correspondant à une valeur logique « 1 » sont déterminées comme type de capteur PNP, normalement fermé.

9. Procédé selon l'une quelconque des revendications 6 à 8,
**caractérisé en ce que**
- le capteur est surveillé par l'unité centrale,
- dans une première étape de configuration, le capteur est libre, et un premier signal d'entrée du capteur est reçu par l'unité centrale, et
- dans une deuxième étape de configuration, le capteur est affecté à un objet disposé dans le segment de convoyage (100, 200, 300, 2100, 2200, 2300, 2400), et un deuxième signal d'entrée du capteur est reçu par l'unité centrale, et
- la détermination du type de capteur au moyen d'une évaluation logique du premier et du deuxième signal d'entrée est effectuée par l'unité centrale.

10. Procédé selon l'une quelconque des revendications précédentes, **caractérisé en ce que** l'unité de commande (102, 202, 302, 2102) présente plusieurs prises de connexion de capteur et plusieurs prises de connexion de moteur, et après l'étape iv), un schéma d'attribution des capteurs connectés (104, 204, 304, 2103, 2203, 2303, 2403) aux mécanismes d'entraînement de convoyage (106, 206, 306, 2106, 2206, 2306, 2406) connectés est établi, comprenant les étapes consistant à :
- placer un objet dans un segment de convoyage (100, 200, 300, 2100, 2200, 2300, 2400) et activer le mécanisme d'entraînement de convoyage du segment de convoyage dans une première direction de convoyage,
- surveiller les signaux de capteur par l'unité centrale, et
- attribuer le mécanisme d'entraînement de convoyage à un capteur qui change de signal après l'activation du mécanisme d'entraînement de convoyage, par l'unité centrale.

11. Procédé selon l'une quelconque des revendications précédentes, **caractérisé en ce qu'**un mécanisme d'entraînement auxiliaire du segment de convoyage est reconnu et attribué par les étapes consistant à
- signaler le mécanisme d'entraînement auxiliaire non attribué à un opérateur **en ce qu'**un signal optique ou acoustique, une séquence prédéterminée de processus de démarrage et d'arrêt du mécanisme d'entraînement auxiliaire est délivrée par l'unité centrale,
- surveiller les signaux de capteur par l'unité centrale,
- déclencher manuellement le capteur (104, 204, 304, 2103, 2203, 2303, 2403) par l'opérateur, et
- attribuer le capteur déclenché manuellement au mécanisme d'entraînement auxiliaire par l'unité centrale.

12. Procédé selon l'une quelconque des revendications précédentes 9 à 11, **caractérisé en**
**ce que** pendant la surveillance des signaux de capteur, le pilotage de capteur commute constamment entre le type de capteur PNP et le type de capteur NPN.

13. Procédé permettant d'aménager une unité de commande (102, 202, 302, 2102) dans un dispositif de convoyage, une unité de commande commandant un ou plusieurs segments de convoyage (100, 200, 300, 2100, 2200, 2300, 2400), et chaque segment de convoyage comprenant
a. un mécanisme d'entraînement de convoyage pour convoyer un objet par le segment de convoyage qui est couplé pour la transmission de signaux à l'unité de commande par l'intermédiaire d'une prise de connexion de moteur, et le cas échéant
b. un capteur (104, 204, 304, 2103, 2203, 2303, 2403) pour détecter un objet dans une position à l'intérieur du segment de convoyage qui est couplé pour la transmission de signaux à l'unité de commande par l'intermédiaire d'une prise de connexion de capteur,
**caractérisé en ce que** l'unité de commande effectue une auto-configuration, et un signal optique est délivré à un utilisateur lors de cette auto-configuration afin de signaler un état d'installation erroné ou correct,
dans lequel l'unité de commande présente plusieurs prises de connexion de capteur, et un schéma d'affectation des prises de connexion de capteur est établi et comparé avec un schéma d'affectation théorique qui comprend pour chaque nombre possible de capteurs connectés un modèle d'affectation théorique, et **en ce qu'**en cas d'écart par rapport au modèle d'affectation théorique, un message d'erreur est délivré par l'unité centrale, le message d'erreur étant formé comme signal optique par une séquence prédéterminée de mouvements du mécanisme d'entraînement de convoyage.

14. Procédé selon la revendication 13,
**caractérisé en**
**ce que** l'auto-configuration est effectuée selon un procédé selon l'une quelconque des revendications précédentes 1 à 13 et le signal optique réalise de préférence le message d'erreur selon la revendication 4, 6 ou 7 ou le signal optique selon la revendication 13.

15. Utilisation d'une unité de commande (102, 202, 302, 2102) dans un dispositif de convoyage, l'unité de commande commandant plusieurs segments de convoyage (100, 200, 300, 2100, 2200, 2300, 2400), et chaque segment de convoyage comprenant
a. un mécanisme d'entraînement de convoyage (106, 206, 306, 2106, 2206, 2306, 2406) pour convoyer un objet par le segment de convoyage qui est couplé pour la transmission de signaux à l'unité de commande par l'intermédiaire d'une prise de connexion de moteur, et
b. un capteur (104, 204, 304, 2103, 2203, 2303, 2403) pour détecter un objet dans une position à l'intérieur du segment de convoyage qui est couplé pour la transmission de signaux à l'unité de commande par l'intermédiaire d'une prise de connexion de capteur,
**caractérisée en ce que** l'unité de commande comprend une unité centrale électronique qui effectue une auto-configuration, comprenant les étapes consistant à :
i) activer un mode configuration au niveau de l'unité de commande,
ii) recevoir un signal de chaque prise de connexion de moteur ou prise de connexion de capteur de l'unité de commande dans une unité centrale de l'unité de commande,
iii) comparer le signal reçu ou les signaux reçus avec une valeur de comparaison stockée dans l'unité de commande, et
iv) déterminer à l'aide de la comparaison du signal/des signaux avec la valeur de comparaison si un mécanisme d'entraînement de convoyage ou un capteur est connecté à une prise de connexion de moteur ou à une prise de connexion de capteur de l'unité de commande, et
v) **en ce que** l'unité de commande présente plusieurs prises de connexion de capteur, et après l'étape iv), établit un schéma d'affectation des prises de connexion de capteur et le compare avec un schéma d'affectation théorique qui comprend pour chaque nombre possible de capteurs connectés un modèle d'affectation théorique, et en cas d'écart par rapport au modèle d'affectation théorique, délivre un message d'erreur, en particulier un message d'erreur optique ou acoustique.

16. Utilisation d'une unité de commande (102, 202, 302, 2102) selon la revendication 15,
**caractérisée en**
**ce que** le message d'erreur est formé par un signal optique par une séquence prédéterminée de mouvements du mécanisme d'entraînement de convoyage (106, 206, 306, 2106, 2206, 2306, 2406).

17. Dispositif de convoyage comprenant un ou plusieurs segments de convoyage (100, 200, 300, 2100, 2200, 2300, 2400) et une unité de commande, chaque segment de convoyage comprenant
a. un mécanisme d'entraînement de convoyage (106, 206, 306, 2106, 2206, 2306, 2406) pour convoyer un objet (40) par le segment de convoyage qui est couplé pour la transmission de signaux à l'unité de commande (102, 202, 302, 2102) par une prise de connexion de moteur, et
b. un capteur (104, 204, 304, 2103, 2203, 2303, 2403) pour détecter un objet dans une position à l'intérieur du segment de convoyage qui est couplé à l'unité de commande pour la transmission de signaux par une prise de connexion de capteur,
**caractérisé en**
**ce que** l'unité de commande (102, 202, 302, 2102) est réalisée de façon à exécuter un procédé selon l'une quelconque des revendications 1 à 14.
